(19) **Europäisches Patentamt / European Patent Office / Office européen des brevets**

(11) **EP 4 434 949 A1**

(12) # EUROPEAN PATENT APPLICATION
published in accordance with Art. 153(4) EPC

(43) Date of publication:
**25.09.2024 Bulletin 2024/39**

(51) International Patent Classification (IPC):
**C03C 10/12** (2006.01)  **C03B 32/02** (2006.01)
**C03C 21/00** (2006.01)

(21) Application number: **22914270.8**

(22) Date of filing: **14.12.2022**

(86) International application number:
**PCT/CN2022/139075**

(87) International publication number:
**WO 2023/125015 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.12.2021   CN 202111682724**
**31.12.2021   CN 202111681556**
**31.12.2021   CN 202111682722**

(71) Applicant: **Hunan Kibing New Materials Co., Ltd.**
**Liling City, Hunan Province 412200 (CN)**

(72) Inventors:
• **XU, Xingjun**
  **Shenzhen, Guangdong 518000 (CN)**
• **TAO, Wugang**
  **Shenzhen, Guangdong 518000 (CN)**
• **YANG, Chenggang**
  **Shenzhen, Guangdong 518000 (CN)**

(74) Representative: **Finetti, Claudia**
**Bugnion S.p.A.**
**Viale Lancetti, 17**
**20158 Milano (IT)**

(54) **GLASS COMPOSITION, MICROCRYSTALLINE GLASS, PREPARATION METHOD THEREFOR AND USE THEREOF**

(57) Provided in the present invention are a glass composition, microcrystalline glass and a preparation method therefor and application thereof. The glass composition includes, by mass percentage, 71.5-74.5% of $SiO_2$; 6.2-8.7% of $Al_2O_3$; 1.7-3% of $P_2O_5$; 10-12.5% of $Li_2O$; 0.1-2% of $Na_2O$; and 3-5% of $ZrO_2$. In the technical solutions of the present invention, the components $SiO_2$, $Al_2O_3$, $P_2O_5$, $Li_2O$, $Na_2O$, and $ZrO_2$ in the glass composition are combined at a specific proportion, and in combination with a crystallization process and a strengthening process of microcrystalline glass, a b value and a haze can be significantly reduced, and the microcrystalline glass with excellent strengthening performance is thereby obtained.

Fig. 1

```
┌─────────────────────────────────────────────────┐
│ Weighing the glass composition as described above │ ─── S10
└─────────────────────────────────────────────────┘
                        │
                        ▼
┌─────────────────────────────────────────────────┐
│ Mixing the glass composition, then melting,       │
│ clarifying, homogenizing, molding, annealing,     │ ─── S20
│ and finally cutting to obtain a basic glass       │
└─────────────────────────────────────────────────┘
                        │
                        ▼
┌─────────────────────────────────────────────────┐
│ Heat treating on the basic glass to obtain the    │
│ microcrystalline glass                            │ ─── S30
└─────────────────────────────────────────────────┘
```

**Description**

**Cross-Reference to Related Application**

The present application claims priority to Chinese Patent Application No. 202111682724.5 filed on December 31, 2021, claims priority to Chinese Patent Application No. 202111681556.8 filed on December 31, 2021, and claims priority to Chinese Patent Application No. 202111682722.6 filed on December 31, 2021, the inventions of which are hereby incorporated by reference in their entireties.

**Technical Field**

The present invention relates to the technical field of glass manufacturing, and particularly to a glass composition, microcrystalline glass and a preparation method and application thereof.

**Background**

With the development of display technologies, glass is commonly used in the protection of display devices. Cover glass used for the protection of electronic products in the market generally belongs to high aluminosilicate glass, and high aluminum facilitates the improvement of stress strength and stress layer depth after ion exchange, but the fall resistance of glass is poor. Research showed that 70% of electronic product damage is caused by inadvertent drops.
By introducing a nucleating agent in a glass formula or adjusting oxide ratio compositions in the formula, and then forming one or more crystalline phases in subsequent heat treatment processes, which is referred to as microcrystalline glass. The microcrystalline glass simultaneously has high transmittance of glass and high strength of ceramics, such that the performance of the glass such as average hardness and fracture toughness can be improved. A microcrystalline phase of the microcrystalline glass may hinder a microcrack extension path, facilitating the overall improvement of the performance of the glass such as scratch resistance, shock resistance, and drop resistance.
The performance of the microcrystalline glass depends on a ratio of a crystalline phase to a glass phase, the sizes of crystal particles, etc. During the preparation of the microcrystalline glass, the b value and haze of the transparent microcrystalline glass prepared currently are relatively large due to factors such as agglomeration of glass compositions, interface morphology of crystalline phases, crystal particle appearance, and macroscopic performance is that transmitted light is yellowish, affecting the transmittance and application performance of the microcrystalline glass.

**Summary**

The present invention is mainly intended to provide a glass composition, microcrystalline glass and a preparation method and application thereof, so as to solve the problems of the relatively-large b value and relatively-high haze of existing microcrystalline glass.
In order to implement the above objective, the present invention provides a glass composition, including, by mass percentage:

71.5-74.5% of $SiO_2$;

6.2-8.7% of $Al_2O_3$;

1.7-3% of $P_2O_5$;

10-12.5% of $Li_2O$;

0.1-2% of $Na_2O$; and

3-5% of $ZrO_2$.

In one embodiment, the glass composition further includes 0.1-1.7% of $B_2O_3$ and/or 0.1-1.5% of CaO.
In one embodiment, $-1.1 \leq W(SiO_2)-6 \times W(Al_2O_3)-2 \times W(Li_2O) \leq 6.7$.
In one embodiment, $0.19 \leq [W(Li_2O)-W(Al_2O_3)]/[W(P_2O_5)+W(ZrO_2)] \leq 0.98$.
In one embodiment, $0.06 \leq [W(ZrO_2)-3 \times W(B_2O_3)]/W(P_2O_5) \leq 1.57$.
In one embodiment, the glass composition includes, by mass percentage:

72-74% of $SiO_2$;

7.5-8.4% of $Al_2O_3$;

2-2.8% of $P_2O_5$;

0.3-0.8% of $B_2O_3$;

10.5-11.8% of $Li_2O$;

0.5-1.3% of $Na_2O$; and

3.4-4.7% of $ZrO_2$.

In one embodiment, $0.6 \leq W(SiO_2)-6 \times W(Al_2O_3)-2 \times W(Li_2O) \leq 5.4$;

$$0.28 \leq [W(Li_2O)-W(Al_2O_3)]/[W(P_2O_5)+W(ZrO_2)] \leq 0.8;$$

and

$$0.5 \leq [W(ZrO_2)-3 \times W(B_2O_3)]/W(P_2O_5) \leq 1.36.$$

In one embodiment, the glass composition includes, by mass percentage:

72.5-73.5% of $SiO_2$;
7.7-8% of $Al_2O_3$;
2.1-2.5% of $P_2O_5$;
0.5-0.7% of $B_2O_3$;
11-11.5% of $Li_2O$;
0.7-1.1% of $Na_2O$;
3.8-4.4% of $ZrO_2$;

In one embodiment, $2.5 \leq W(SiO_2)-6 \times W(Al_2O_3)-2 \times W(Li_2O) \leq 4.3$;

$$0.43 \leq [W(Li_2O)-W(Al_2O_3)]/[W(P_2O_5)+W(ZrO_2)] \leq 0.64;$$

and

$$0.81 \leq [W(ZrO_2)-3 \times W(B_2O_3)]/W(P_2O_5) \leq 1.16.$$

The present invention provides a glass composition, including, by mass percentage: 72-74.3% of $SiO_2$, 7-8.5% of $Al_2O_3$, 1.8-3% of $P_2O_5$, 10.2-12.5% of $Li_2O$, 0.5-2% of $Na_2O$, and 3.5-4.7% of $ZrO_2$.
In one embodiment, $2.9 \leq W(SiO_2)-6 \times W(Al_2O_3)-2 \times W(Li_2O) \leq 5.2$;

$$0.26 \leq [W(Li_2O)-W(Al_2O_3)]/[W(P_2O_5)+W(ZrO_2)] \leq 0.85;$$

$$1.17 \leq W(ZrO_2)/W(P_2O_5) \leq 2.61;$$

and

$$2.5 \leq [W(SiO_2)-6 \times W(Al_2O_3)-2 \times W(Li_2O)]/W(Na_2O) \leq 5.8.$$

In one embodiment, the glass composition includes, by mass percentage:
72.8-73.9% of $SiO_2$, 7.4-8% of $Al_2O_3$, 2.1-2.6% of $P_2O_5$, 10.7-11.7% of $Li_2O$, 0.9-1.4% of $Na_2O$, and 3.9-4.4% of $ZrO_2$.

In one embodiment, $4.5 \leq W(SiO_2)-6 \times W(Al_2O_3)-2 \times W(Li_2O) \leq 5.2$;

$$0.42 \leq [W(Li_2O)-W(Al_2O_3)]/[W(P_2O_5)+W(ZrO_2)] \leq 0.66;$$

$$1.5 \leq W(ZrO_2)/W(P_2O_5) \leq 2.1;$$

and

$$3.57 \leq [W(SiO_2)-6 \times W(Al_2O_3)-2 \times W(Li_2O)]/W(Na_2O) \leq 5.$$

The present invention provides a glass composition, including the following components by mass percentage:
71.5-74% of $SiO_2$, 6.2-8.5% of $Al_2O_3$, 1.7-2.6% of $P_2O_5$, 0.1-1.7% of $B_2O_3$, 10-12% of $Li_2O$, 0.1-2% of $Na_2O$, 0.1-1.5% of $CaO$, and 3-5% of $ZrO_2$.

In one embodiment, the glass composition includes the following components by mass percentage based on oxides:
72-73.5% of $SiO_2$, 6.8-8.2% of $Al_2O_3$, 2-2.4% of $P_2O_5$, 0.4-1.1% of $B_2O_3$, 10.8-11.7% of $Li_2O$, 0.4-1.7% of $Na_2O$, 0.3-1% of $CaO$, and 3.3-4.4% of $ZrO_2$.

In one embodiment, $2 \leq [W(ZrO_2)-W(CaO)]/[W(P_2O_5)-W(B_2O_3)] \leq 3.22$.

In one embodiment, $2.06 \leq [W(ZrO_2)-W(CaO)]/[W(P_2O_5)-W(B_2O_3)] \leq 2.31$.

In one embodiment, $2.3 \leq W(SiO_2)-6 \times W(Al_2O_3)-2 \times W(Li_2O) \leq 10.3$; and

$$0.27 \leq [W(Li_2O)-W(Al_2O_3)]/[W(P_2O_5)+W(ZrO_2)] \leq 0.87.$$

In one embodiment, $2.7 \leq W(SiO_2)-6 \times W(Al_2O_3)-2 \times W(Li_2O) \leq 7.8$; and

$$0.46 \leq [W(Li_2O)-W(Al_2O_3)]/[W(P_2O_5)+W(ZrO_2)] \leq 0.77.$$

The present invention further provides a microcrystalline glass, including the glass composition as described above.

In one embodiment, a thickness of the microcrystalline glass is 0.3-1.5 mm.

The present invention further provides a microcrystalline glass, including the glass composition as described above, and the microcrystalline glass contains a crystalline phase $Li_2Si_2O_5$ and a crystalline phase $LiAlSi_4O_{10}$.

In one embodiment, $0.91 \leq W(Li_2Si_2O_5)/W(LiAlSi_4O_{10}) \leq 1.06$.

In one embodiment, $0.97 \leq W(Li_2Si_2O_5)/W(LiAlSi_4O_{10}) \leq 1.03$.

In one embodiment, $10.44 \leq M \leq 12.54$; and

$M = 1.3 \times [W(Li_2Si_2O_5)/W(LiAlSi_4O_{10})] \times \{0.86 \times [W(SiO_2)-6 \times W(Al_2O_3)-2 \times W(Li_2O)]+1.83 \times [(W(Li_2O)-W(Al_2O_3))/(W(P_2O_5)+W(ZrO_2))]+1.67 \times [W(ZrO_2)/W(P_2O_5)]+0.25 \times [(W(SiO_2)-6 \times W(Al_2O_3)-2 \times W(Li_2O))/W(Na_2O)]\}$.

In one embodiment, $11.85 \leq M \leq 12.54$.

The present invention further provides a microcrystalline glass, including the glass composition as described above.

In one embodiment, a crystalline phase of the microcrystalline glass mainly is a lithium disilicate and a petalite, and a total content of the crystalline phase of the microcrystalline glass is 60%-90%, a content of the lithium disilicate is greater than 30%, and a content of the petalite is greater than 30%.

The present invention further provides a method for preparing a microcrystalline glass, including the following steps.

At S10, the glass composition as described above is weighed.

At S20, the glass composition is mixed, melted, clarified, homogenized, molded, annealed and finally cut to obtain a basic glass.

At S30, heat treatment is performed on the basic glass to obtain the microcrystalline glass.

In one embodiment, S30 includes the following operations.

The basic glass is heated from a room temperature to 510-540°C in 20-60 min, and a first nucleation treatment is performed, where a time for the first nucleation treatment is 3-8h.

A temperature is heated to 580-610°C in 5-30 min, and a second nucleation treatment is performed, where a time for the second nucleation treatment is 3-8h.

The temperature is heated to 650-680°C in 5-30 min, and a crystallization treatment is performed, where a time for the crystallization treatment is 3-8h.

The temperature is cooled to the room temperature to obtain the microcrystalline glass.

In one embodiment, the step of performing heat treatment on the basic glass to obtain the microcrystalline glass includes the following operations.

The basic glass is heated from the room temperature to 530-570°C in 20-60 min, and nucleation treatment is performed for over 3h.

A temperature is heated to 680-720°C in 5-30 min, and the crystallization treatment is performed for over 3h.

The temperature is cooled to the room temperature to obtain the microcrystalline glass.

In one embodiment, after S30, the method further includes the following step.

At S40, the microcrystalline glass is pre-treated, and then placed into an ion exchange bath for a salt bath, so as to obtain a chemically-strengthened microcrystalline glass.

The ion exchange bath includes, by mass percentage, 20-40% of NaNOs and 60-80% of KNOs; and/or,

A strengthening temperature of the salt bath is 420-500°C; and/or

A strengthening time of the salt bath is 3-8h.

In one embodiment, in S20, a molding method includes a float molding, an overflow molding, a calendaring molding, or a slit pull-down molding.

The present invention further provides an electronic display terminal, including the microcrystalline glass as described above.

In the technical solutions of the present invention, the components $SiO_2$, $Al_2O_3$, $P_2O_5$, $Li_2O$, $Na_2O$, and $ZrO_2$ in the glass composition are combined at a specific proportion, and in combination with a crystallization process and a strengthening process of the microcrystalline glass, a b value and a haze can be significantly reduced, and the microcrystalline glass with excellent strengthening performance is thereby obtained.

**Brief Description of the Drawings**

In order to more clearly illustrate the embodiments of the present invention or the technical solutions in the prior art, the drawings used in the description of the embodiments or the prior art will be briefly described below. It is apparent that the drawings in the following descriptions are merely some embodiments of the present invention. Other related drawings may also be obtained from those skilled in the art according to these drawings without any creative work.

Fig. 1 is a flowchart of one embodiment of a method for preparing the microcrystalline glass according to the present invention.

Fig. 2 is a flowchart of another embodiment of a method for preparing the microcrystalline glass according to the present invention.

Fig. 3 is a diagram of a linear relationship between M and fracture toughness KIC of the microcrystalline glass in the present invention.

The objective implementation, functional features and advantages of the present invention will be further described in combination with the embodiments and with reference to the drawings.

**Detailed Description of the Embodiments**

In order to make the purposes, technical solutions and advantages of the embodiments of the present invention clearer, the technical solutions in the embodiments of the present invention will be clearly and completely described below. It is apparent that the described embodiments are only part of the embodiments of the present invention, not all the embodiments.

It is to be noted that, if specific conditions are not indicated in the embodiments, the implementations are carried out in accordance with the conventional conditions or the conditions recommended by manufacturers. Reagents or instruments used are conventional products that may be purchased commercially if the manufacturers are not specified. In addition, the meaning of "and/or" as it appears throughout the specification includes three concurrent solutions, including, for example, "A and/or B", which includes solution A, or solution B, or solutions A and B that are both met. Furthermore, the technical solutions between the various embodiments may be combined with each other, but it must be based on the fact that those of ordinary skill is able to realize it, and when the combination of the technical solutions appears to be contradictory or unattainable, it should be considered that the combination of such technical solutions does not exist, and is not within the scope of protection claimed in the present invention. All other embodiments obtained by those of ordinary skill in the art on the basis of the embodiments in the present invention without creative work all fall within the scope of protection of the present invention.

With the development of display technologies, glass is commonly used in the protection of display devices. Cover glass used for the protection of electronic products in the market generally belongs to high aluminosilicate glass, and high aluminum facilitates the improvement of stress strength and stress layer depth after ion exchange, but the fall resistance of glass is poor. Research showed that 70% of electronic product damage is caused by inadvertent drops.

By introducing a nucleating agent in a glass formula or adjusting oxide ratio compositions in the formula, and then forming one or more crystalline phases in subsequent heat treatment processes, which is referred to as microcrystalline glass. The microcrystalline glass simultaneously has high transmittance of glass and high strength of ceramics, such that the performance of the glass such as average hardness and fracture toughness can be improved. A microcrystalline phase of the microcrystalline glass may hinder a microcrack extension path, facilitating the overall improvement of the performance of the glass such as scratch resistance, shock resistance, and drop resistance.

The performance of the microcrystalline glass depends on a ratio of a crystalline phase to a glass phase, the sizes of crystal particles, etc. During the preparation of the microcrystalline glass, the b value and haze of the transparent microcrystalline glass prepared currently are relatively large due to factors such as agglomeration of glass compositions, interface morphology of crystalline phases, crystal particle appearance, and macroscopic performance is that transmitted light is yellowish, affecting the transmittance and application performance of the microcrystalline glass.

In view of this, the present invention provides a glass composition. Microcrystalline glass prepared by the glass composition is able to effectively solve the problems of the relatively-large b value and relatively-high haze of existing microcrystalline glass.

An embodiment of the present invention provides a glass composition, including, by mass percentage, 71.5-74.5% of $SiO_2$; 6.2-8.7% of $Al_2O_3$; 1.7-3% of $P_2O_5$; 10-12.5% of $Li_2O$; 0.1-2% of $Na_2O$; and 3-5% of $ZrO_2$.

In another embodiment, the glass composition further includes, by mass percentage, 0.1-1.7% of $B_2O_3$ and/or 0.1-1.5% of $CaO$.

An embodiment of the present invention provides a glass composition, including, by mass percentage, 71.5-74.5% of $SiO_2$; 7.3-8.7% of $Al_2O_3$; 1.7-3% of $P_2O_5$; 0.1-1% of $B_2O_3$; 10.2-12% of $Li_2O$; 0.4-1.5% of $Na_2O$; and 3.1-5% of $ZrO_2$.

An embodiment of the present invention provides a glass composition, including, the following components by mass percentage based on oxides: 71.5-74% of $SiO_2$, 6.2-8.5% of $Al_2O_3$, 1.7-2.6% of $P_2O_5$, 0.1-1.7% of $B_2O_3$, 10-12% of $Li_2O$, 0.1-2% of $Na_2O$, 0.1-1.5% of $CaO$, and 3-5% of $ZrO_2$.

The present invention provides a glass composition. Microcrystalline glass prepared by the glass composition is able to effectively solve the problems of a relatively-large b value and a relatively-high haze, and a reduced crystal content and a damaged interlocking structure of two crystalline phases during a chemical strengthening process.

The glass composition includes the following components by mass percentage: 72-74.3% of $SiO_2$, 7-8.5% of $Al_2O_3$, 1.8-3% of $P_2O_5$, 10.2-12.5% of $Li_2O$, 0.5-2% of $Na_2O$, and 3.5-4.7% of $ZrO_2$.

First, it is to be noted that, as expected in the present invention, a molecular formula of petalite in the crystalline phase of the microcrystalline glass is $LiAlSi_4O_{10}$, and a molecular formula of lithium disilicate is $Li_2Si_2O_5$. The mass percentage of each component is calculated based on the sum of the mass of $SiO_2$, $Al_2O_3$, $P_2O_5$, $B_2O_3$, $Li_2O$, $Na_2O$, and $ZrO_2$ in the glass composition, or based on the sum of the mass of $SiO_2$, $Al_2O_3$, $P_2O_5$, $Li_2O$, $Na_2O$, $ZrO_2$ in the glass composition.

The $SiO_2$ introduced in the glass composition of the present invention is a component constituting a glass frame. The $SiO_2$ may be used as a main body of a glass network structure, and empowers basic glass and microcrystalline glass with good chemical stability, mechanical properties, and molding properties. In a glass microcrystallization process, a $SiO_2$ source is provided to form $Li_2Si_2O_5$ and $LiAlSi_4O_{10}$ crystalline phases. In the glass microcrystallization process, quartz and a quartz solid solution appear in the glass microcrystallization process due to excessive $SiO_2$. Therefore, taking all factors into consideration, the content of $SiO_2$ is selected from 71.5wt% to 74.5wt%, or the content of $SiO_2$ is selected from 72wt% to 74.3wt%, or the content of $SiO_2$ is selected from 71.5wt% to 74wt%.

The $Al_2O_3$ introduced in the glass composition of the present invention belongs to a network intermediate oxide. Non-bridging oxygen and Al form an aluminum oxide tetrahedron, a volume is greater than that of a silicon-oxygen tetrahedron, a larger slit is generated in a glass structure, facilitating ion exchange, thus achieving a better chemical strengthening effect and improving the mechanical property of glass. However, the $Al_2O_3$ belongs to an extremely refractory oxide, which can rapidly increase high temperature viscosity of the glass, leading to increased difficulty in clarifying and homogenizing the glass, resulting in a large increase in the concentration of bubble defects in the glass. If the content of $Al_2O_3$ is too high, a glass microcrystallization temperature significantly increases, such that the crystallization ability of the basic glass is inhibited, and lithium disilicate is difficult to form. During the promotion of crystallization, $LiAlSi_4O_{10}$ is excessively formed in the glass, and even a $LiAlSi_2O_6$ crystalline phase is formed in the basic glass, causing the transmittance of the glass to reduce. Therefore, taking all factors into consideration, the content of $Al_2O_3$ is selected from 7.3wt% to 8.7wt%, or the content of $Al_2O_3$ is selected from 6.2wt% to 8.5wt%, or the content of $Al_2O_3$ is selected from 7wt% to 8.5wt%.

The $P_2O_5$ is introduced in the glass composition of the present invention, the $P_2O_5$ is more favored to induce precipitation of lithium disilicate crystals. A $P^{5+}$ ion has a very large field strength, strong oxygen capture ability, and a phosphorus-oxygen network structure tends to be strong and solid. Since the field strength of the $P^{5+}$ ion is greater than that of a $Si^{4+}$ ion, the $P^{5+}$ ion is easy to separate from a network by combining with an alkali metal ion, so as to form a crystal nucleus, such that phase splitting is induced in the basic glass, reducing nucleation activation energy, thereby facilitating the crystallization of the glass. $Li_2O$ and $P_2O_5$ react to form a $Li_3PO_4$ crystalline phase, the $Li_2O$ and the $SiO_2$ in the glass are induced to react to form $Li_2SiO_3$, and finally, the $Li_2Si_2O_5$ crystalline phase is formed. In addition, the $P_2O_5$ is connected to form a network with a $[PO_4]$ tetrahedron, causing the glass network structure to show a loose state, such that a network gap becomes larger, facilitating mutual diffusion of $Na^+$ ions in the glass and $K_+$ ions in a fused salt, and ion strengthening plays a role in promoting a glass strengthening process, and plays an important role in obtaining a high compression stress layer. However, due to excess content of the $P_2O_5$, precipitation of lithium metasilicate is promoted during a crystallization process, resulting in too few glass phases, such that sufficient $Li_2Si_2O_5$ crystalline phase cannot be formed, and crystallized glass with high transmittance is difficult to obtain due to the promoted precipitation of a quartz phase. Therefore, taking all factors into consideration, the content of $P_2O_5$ is selected from 1.7wt% to 3wt%, or the content of $P_2O_5$ is selected from 1.8wt% to 3wt%, or the content of $P_2O_5$ is selected from 1.7wt% to 2.6wt%.

The $B_2O_3$ is introduced in the glass composition of the present invention, the addition of the $B_2O_3$ may improve the meltability of the glass and reduce a melting point, and is conductive to improving scratch resistance of glass surfaces. Research of the present invention found that, the $B_2O_3$ is present in the form of dense $[BOa]$ in a microcrystalline glass structure, which may effectively inhibit the growth of the petalite to further cause large haze in the microcrystalline glass caused during the nucleation of lithium disilicate (>580°C). In another aspect, the migration of alkali metal ions in the microcrystalline glass is limited to stabilize the microcrystalline glass structure. Therefore, taking all factors into consideration, the content of $B_2O_3$ is selected from 0.1wt% to 1.7wt%, or the content of $B_2O_3$ is selected from 0.1wt% to 1wt%.

The $Li_2O$ introduced in the glass composition of the present invention belongs to a network extracorporeal oxide, which reduces the viscosity of the glass and promotes the melting and clarification of the glass. $Li^+$ is a main exchange ion during a chemical strengthening treatment process. The $Li^+$ ion is small in radius, such that an ion exchange speed of the glass containing $Li^+$ is faster, and the glass obtains a thicker strengthened layer with a short time. The $Li^+$ ion exchanges with a $Na^+$ ion in molten liquid, and has a faster speed than an exchange speed of $Na^+$ and $K^+$ ions. A high $Li_2O$ concentration promotes the formation of $Li_3PO_4$ in a basic microcrystallization process, facilitating the formation of a lithium disilicate crystalline phase and a petalite crystalline phase. In order to cause the microcrystalline glass to obtain an ion strengthening degree with a high depth, sufficient $Li^+$ must be available for mutual strengthening with $Na^+$ during the chemical strengthening process, so as to reduce cracks on the surface of the crystallized glass, thus providing a mechanical strength effect of the microcrystallization process. However, if the $Li_2O$ is too high, the viscosity of the glass is too low, such that it is difficult to obtain chemically-stable glass components, simultaneously causing a compression stress value during an ion strengthening process to be too low, and leading to an increase in raw material cost. Therefore, taking all factors into consideration, the content of $Li_2O$ is selected from 10.2wt% to 12wt%, or the content of $Li_2O$ is selected from 10.2wt% to 12.5wt%, or the content of $Li_2O$ is selected from 10wt% to 12wt%.

The $Na_2O$ introduced in the glass composition of the present invention is able to significantly reduce the viscosity of the basic glass, promote the melting and clarification of the basic glass, and reduce a glass crystallization temperature at the same time. The crystallized glass can be strengthened with $K^+$ ions in a potassium nitrate molten salt, so as to generate high compression stress on the glass surface to improve glass strength, and sufficient $Na^+$ must be available in the glass. Therefore, taking all factors into consideration, the content of $Na_2O$ is selected from 0.1wt% to 2wt%, or the content of $Na_2O$ is selected from 0.4wt% to 1.5wt%, or the content of $Na_2O$ is selected from 0.5wt% to 2wt%.

The $ZrO_2$ is introduced in the glass composition of the present invention. In one aspect, zirconium ions have high potential energy and may enhance the glass network structure, and the $ZrO_2$ is more favorable to induce precipitation of petalite crystals. In another aspect, the $ZrO_2$ facilitates the reduction in the sizes of crystal particles during the crystallization process, thus increasing the transmittance of the glass and rapidly improving the chemical stability of the glass. Next, the fracture toughness and bending strength of the glass are improved, crystalline phase transition of zirconia may produce stress induction and improve fracture toughness after crystallization. Excessive $ZrO_2$ content leads to the presence of a $ZrO_2$ unmelted material in the glass, which results in the inability of the glass to precipitate crystals uniformly. Therefore, taking all factors into consideration, the content of $ZrO_2$ is selected from 3wt% to 5wt%, or the

content of $ZrO_2$ is selected from 3.1wt% to 5wt%, or the content of $ZrO_2$ is selected from 3.5wt% to 4.7wt%.

In the technical solutions of the present invention, the components $SiO_2$, $Al_2O_3$, $P_2O_5$, $B_2O_3$, $Li_2O$, $Na_2O$, and $ZrO_2$ in the glass composition are combined at a specific proportion, and in combination with a crystallization process and a strengthening process of microcrystalline glass, a b value and a haze can be significantly reduced, and the microcrystalline glass with excellent strengthening performance is thereby obtained.

In addition, the chemical stability and mechanical strength of the glass can be improved by introducing the CaO in the glass composition of the present invention. Since the CaO binds acid $Al_2O_3$ more easily in the glass structure, affecting a coordination state of boron. In addition, the alkalinity of the CaO is greater than that of the $Na_2O$, such that negative charges carried by [AlOa] tetrahedron may be compensated to stabilize a crystalline phase in the microcrystalline glass. However, high CaO content causes a decrease in devitrification resistance. Therefore, taking all factors into consideration, the content of CaO is selected from 0.1wt% to 1.5wt%.

In the technical solutions of the present invention, the components $SiO_2$, $Al_2O_3$, $P_2O_5$, $B_2O_3$, $Li_2O$, $Na_2O$, CaO, and $ZrO_2$ in the glass composition are combined at a specific proportion, and in combination with a crystallization process and a strengthening process of microcrystalline glass, situations of a reduced crystal content and a damaged interlocking structure of two crystalline phases during a chemical strengthening process can be significantly improved, thereby obtaining microcrystalline glass with excellent strengthening performance.

In one embodiment, the components in the glass composition include $SiO_2$, $Al_2O_3$, $P_2O_5$, $Li_2O$, $Na_2O$, and $ZrO_2$, and various components in the glass composition meet: $2.9 \leq W(SiO_2)-6\times W(Al_2O_3)-2\times W(Li_2O) \leq 5.2$, recorded as $A = W(SiO_2)-6\times W(Al_2O_3)-2\times W(Li_2O)$, where W represents a mass percentage of the component in the sum of the mass of all oxide components, and an A value is a numerator value of the mass percentage calculated by the formula. If the A value is low, the $SiO_2$ all enters the crystalline phase, and accordingly there is an excess of $Al_2O_3$ or $Li_2O$; and if the A value is too high, the $Al_2O_3$ or $Li_2O$ all enter the crystalline phase, the remaining $SiO_2$ exists as a network skeleton structure in a glass phase, and a total crystalline phase content of the microcrystalline glass is low. Therefore, by controlling the A value within the above range, excess $Al_2O_3$ or $Li_2O$ is avoided, such that the total crystalline phase content of the microcrystalline glass is effectively increased. Preferably, $4.5 \leq W(SiO_2)-6\times W(Al_2O_3)-2\times W(Li_2O) \leq 5.2$.

Various components in the glass composition meet: $0.26 \leq [W(Li_2O)-W(Al_2O_3)]/[W(P_2O_5)+W(ZrO_2)] \leq 0.85$, recorded as $B = [W(Li_2O)-W(Al_2O_3)]/[W(P_2O_5)+W(ZrO_2)]$, where W represents a mass percentage of the component in the sum of the mass of all oxide components. If a B value is too low, unexpected crystalline phases such as β-quartz are easily produced, the formation proportion of the petalite crystalline phase is high, and crystal particles are easy to grow, resulting in translucent or even opaque microcrystalline proportions. If a B value is too high, the proportion of the glass phase in the microcrystalline glass increases, and the performance advantages of the microcrystalline glass cannot be fully achieved. Therefore, by controlling the B value within the above range, the performance advantages of the microcrystalline glass are fully achieved, such that translucent or even opaque microcrystalline proportions of the microcrystalline glass is avoided. Preferably, $0.42 \leq [W(Li_2O)-W(Al_2O_3)]/[W(P_2O_5)+W(ZrO_2)] \leq 0.66$.

Various components in the glass composition meet: $1.17 \leq W(ZrO_2)/W(P_2O_5) \leq 2.61$, recorded as $C_1 = W(ZrO_2)/W(P_2O_5)$, where W represents a mass percentage of the component in the sum of the mass of all oxide components. By controlling the $C_1$ value within the above range, the activation energy of a liquid-liquid surface reduces to make it split into phases, such that nucleation and precipitation of crystals may be realized at low temperatures. Therefore, liquid-phase crystallization and unstable decomposition lead to the development of phase interfaces, the activation energy or energy barrier for nucleation reduces to lower a nucleation temperature and a precipitation temperature. The two crystalline phases compete for a silicon source and a lithium source, i.e., destroying the structure of the crystalline phase already formed by the other phase in order to form its own phase, crystalline phase amounts of the formed petalite and lithium disilicate are close to each other ($W(Li_2Si_2O_5)/W(LiAlSi_4O_{10})=0.91-1.06$, details are described below), the sizes of the crystals are uniform and <100 nm, meeting basic requirements for optical visibility. If the $C_1$ value is too high or too low, an increase in a single crystalline phase is caused and easy to grow, microcrystalline visible light transmittance decreases, and the haze increases. Preferably, $1.5 \leq W(ZrO_2)/W(P_2O_5) \leq 2.1$.

Various components in the glass composition meet: $2.5 \leq [W(SiO_2)-6\times W(Al_2O_3)-2\times W(Li_2O)]/W(Na_2O) \leq 5.8$, recorded as $D = [W(SiO_2)-6\times W(Al_2O_3)-2\times W(Li_2O)]/W(Na_2O)$, where W represents a mass percentage of the component in the sum of the mass of all oxide components. By controlling a D value within the above range, a glass crystalline structure is stabilized, in particular, in the strengthening process, the migration of lithium ions is inhibited. The interlocking structure formed by the petalite and the lithium disilicate of the microcrystalline glass is further maintained, so as to improve the performance of the microcrystalline glass. If the D value is too high, the chemically strengthened ions of the microcrystalline glass are difficult to exchange; and if the D value is too low, the interlocking structure formed by the petalite and the lithium disilicate of the microcrystalline glass cannot be maintained, and the microcrystalline structure is damaged during the chemical strengthening process. Preferably, $3.57 \leq [W(SiO_2)-6\times W(Al_2O_3)-2\times W(Li_2O)]/W(Na_2O) \leq 5$.

In one embodiment, preferably, various components in the glass composition meet the following conditions: $SiO_2$ is 72.8-73.9%, $Al_2O_3$ is 7.4-8%, $P_2O_5$ is 2.1-2.6%, $Li_2O$ is 10.7-11.7%, $Na_2O$ is 0.9-1.4%, and $ZrO_2$ is 3.9-4.4%.

The performance of the microcrystalline glass obtained by the glass composition is further optimized.

In one embodiment, the components in the glass composition include $SiO_2$, $Al_2O_3$, $P_2O_5$, $B_2O_3$, $Li_2O$, $Na_2O$, and $ZrO_2$, and various components in the microcrystalline glass meet: $-1.1 \leq W(SiO_2)-6 \times W(Al_2O_3)-2 \times W(Li_2O) \leq 6.7$, recorded as $A=W(SiO_2)-6 \times W(Al_2O_3)-2 \times W(Li_2O)$, where W represents a mass percentage of the component in the sum of the mass of all components, and an A value is a numerator value of the mass percentage calculated by the formula. If the A value is too low, the $SiO_2$ all enters the crystalline phase, and accordingly there is an excess of $Al_2O_3$ or $Li_2O$; the formation proportion of the petalite crystalline phase is high, and crystal particles are easy to grow, resulting in translucent or even opaque microcrystalline proportions. If the A value is too high, the $Al_2O_3$ or $Li_2O$ all enter the crystalline phase, the remaining $SiO_2$ exists as a network skeleton structure in a glass phase, and a total crystalline phase content of the microcrystalline glass is low. Therefore, by controlling the A value within the above range, translucent or even opaque microcrystalline proportions of the microcrystalline glass are avoided, and the total crystalline phase content of the microcrystalline glass is effectively increased.

Various components in the microcrystalline glass meet: $0.19 \leq [W(Li_2O)-W(Al_2O_3)]/[W(P_2O_5)+W(ZrO_2)] \leq 0.98$, recorded as $B = [W(Li_2O)-W(Al_2O_3)]/[W(P_2O_5)+W(ZrO_2)]$, where W represents a mass percentage of the component in the sum of the mass of all components. If the B value is too low, the proportion of the glass phase in the microcrystalline glass increases, and the performance advantages of the microcrystalline glass cannot be fully achieved. If a B value is too high, unexpected crystalline phases such as β-quartz are easily produced, the formation proportion of the petalite crystalline phase is high, and crystal particles are easy to grow, resulting in translucent or even opaque microcrystalline proportions. Therefore, by controlling the B value within the above range, the performance advantages of the microcrystalline glass are fully achieved, such that translucent or even opaque microcrystalline proportions of the microcrystalline glass is avoided.

Various components in the microcrystalline glass meet: $0.06 \leq [W(ZrO_2)-3 \times W(B_2O_3)]/W(P_2O_5) \leq 1.57$, recorded as $C_2=[W(ZrO_2)-3 \times W(B_2O_3)]/W(P_2O_5)$, where W represents a mass percentage of the component in the sum of the mass of all components. By controlling the $C_2$ value within the above range, the activation energy of a liquid-liquid surface reduces to make it split into phases, such that nucleation and precipitation of crystals may be realized at low temperatures. Therefore, liquid-phase crystallization and unstable decomposition lead to the development of phase interfaces, the activation energy or energy barrier for nucleation reduces to lower a nucleation temperature and a precipitation temperature. The two crystalline phases compete for a silicon source and a lithium source, i.e., destroying the structure of the crystalline phase already formed by the other phase in order to form its own phase, crystalline phase amounts of the formed petalite and lithium disilicate are close to each other, the sizes of the crystals are uniform and <100 nm, meeting basic requirements for optical visibility. If the $C_2$ value is too high or too low, an increase in a single crystalline phase is caused and easy to grow, microcrystalline visible light transmittance decreases, and the haze increases.

In one embodiment, preferably, various components in the glass composition meet the following conditions: $SiO_2$ is 72-74%; $Al_2O_3$ is 7.5-8.4%; $P_2O_5$ is 2-2.8%; $B_2O_3$ is 0.3-0.8%; $Li_2O$ is 10.5-11.8%; $Na_2O$ is 0.5-1.3%; and $ZrO_2$ is 3.4-4.7%. The performance of the microcrystalline glass obtained by the glass composition is further optimized.

For the proportions of various components in the glass composition, more preferably, various components in the microcrystalline glass meet: $0.6 \leq W(SiO_2)-6 \times W(Al_2O_3)-2 \times W(Li_2O) \leq 5.4$; $0.28 \leq [W(Li_2O)-W(Al_2O_3)]/[W(P_2O_5)+W(ZrO_2)] \leq 0.8$; and $0.5 \leq [W(ZrO_2)-3 \times W(B_2O_3)]/W(P_2O_5) \leq 1.36$.

In one embodiment, various components in the glass composition meet the following conditions: $SiO_2$ is 72.5-73.5%; $Al_2O_3$ is 7.7-8%; $P_2O_5$ is 2.1-2.5%; $B_2O_3$ is 0.5-0.7%; $Li_2O$ is 11-11.5%; $Na_2O$ is 0.7-1.1%; and $ZrO_2$ is 3.8-4.4%. The microcrystalline glass obtained by the glass composition achieves better performance.

For the proportions of various components in the glass composition, more preferably, various components in the microcrystalline glass meet: $2.5 \leq W(SiO_2)-6 \times W(Al_2O_3)-2 \times W(Li_2O) \leq 4.3$; $0.43 \leq [W(Li_2O)-W(Al_2O_3)]/[W(P_2O_5)+W(ZrO_2)] \leq 0.64$; and $0.81 \leq [W(ZrO_2)-3 \times W(B_2O_3)]/W(P_2O_5) \leq 1.16$.

In one embodiment, preferably, various components in the glass composition meet the following conditions: $SiO_2$ is 72-73.5%, $Al_2O_3$ is 6.8-8.2%, $P_2O_5$ is 2-2.4%, $B_2O_3$ is 0.4-1.1%, $Li_2O$ is 10.8-11.7%, $Na_2O$ is 0.4-1.7%, CaO is 0.3-1%, and $ZrO_2$ is 3.3-4.4%. The performance of the microcrystalline glass obtained by the glass composition is further optimized.

In one embodiment, the components in the glass composition include $SiO_2$, $Al_2O_3$, $P_2O_5$, $B_2O_3$, $Li_2O$, $Na_2O$, CaO, and $ZrO_2$, and various components in the glass composition meet: $2.3 \leq W(SiO_2)-6 \times W(Al_2O_3)-2 \times W(Li_2O) \leq 10.3$, recorded as $A = W(SiO_2)-6 \times W(Al_2O_3)-2 \times W(Li_2O)$, where W represents a mass percentage of the component, and an A value is a numerator value of the mass percentage calculated by the formula. If the A value is too low, the $SiO_2$ all enters the crystalline phase, and accordingly there is an excess of $Al_2O_3$ or $Li_2O$; the formation proportion of the petalite crystalline phase is high, and crystal particles are easy to grow, resulting in translucent or even opaque microcrystalline proportions. If the A value is too high, the $Al_2O_3$ or $Li_2O$ all enter the crystalline phase, the remaining $SiO_2$ exists as a network skeleton structure in a glass phase, and a total crystalline phase content of the microcrystalline glass is low. Therefore, by controlling the A value within the above range, translucent or even opaque microcrystalline proportions of the microcrystalline glass are avoided, and the total crystalline phase content of the microcrystalline glass is effectively increased. In one embodiment, preferably, $2.7 \leq W(SiO_2)-6 \times W(Al_2O_3)-2 \times W(Li_2O) \leq 7.8$.

Various components in the glass composition meet: $0.27 \leq [W(Li_2O)-W(Al_2O_3)]/[W(P_2O_5)+W(ZrO_2)] \leq 0.87$, recorded as $B = [W(Li_2O)-W(Al_2O_3)]/[W(P_2O_5)+W(ZrO_2)]$, where W represents a mass percentage of the component. If the B value is too low, the proportion of the glass phase in the microcrystalline glass increases, and the performance advantages of the microcrystalline glass cannot be fully achieved. If a B value is too high, unexpected crystalline phases such as $\beta$-quartz are easily produced, the formation proportion of the petalite crystalline phase is high, and crystal particles are easy to grow, resulting in translucent or even opaque microcrystalline proportions. Therefore, by controlling the B value within the above range, the performance advantages of the microcrystalline glass are fully achieved, such that translucent or even opaque microcrystalline proportions of the microcrystalline glass is avoided. In one embodiment, preferably, $0.46 \leq [W(Li_2O)-W(Al_2O_3)]/[W(P_2O_5)+W(ZrO_2)] \leq 0.77$.

Various components in the glass composition meet: $2 \leq [W(ZrO_2)-W(CaO)]/[W(P_2O_5)-W(B_2O_3)] \leq 3.22$, recorded as $C_3 = [W(ZrO_2)-W(CaO)]/[W(P_2O_5)-W(B_2O_3)]$, where W represents a mass percentage of the component. By controlling the $C_3$ value within the above range, in one aspect, the activation energy of a liquid-liquid surface reduces to make it split into phases, such that nucleation and precipitation of crystals may be realized at low temperatures; and crystalline phase amounts of the formed petalite and lithium disilicate are close to each other, the sizes of the crystals are uniform and <100 nm, meeting basic requirements for optical visibility. In another aspect, a glass crystalline structure is stabilized, in particular, in the strengthening process, the migration of lithium ions is inhibited, and the content of the chemically-strengthened microcrystalline glass is increased. In addition, if the $C_3$ value is too high or too low, microcrystalline visible light transmittance, the b value, and haze are affected. In one embodiment, preferably, $2.06 \leq [W(ZrO_2)-W(CaO)]/[W(P_2O_5)-W(B_2O_3)] \leq 2.31$.

An embodiment of the present invention further provides microcrystalline glass, including the glass composition as described above. The microcrystalline glass includes all technical features of the glass composition, and thus has all technical effects brought by the glass composition, and details are not described herein again.

In one embodiment, a thickness of the microcrystalline glass is 0.3-1.5 mm. If a plate thickness of the microcrystalline glass is thinner, the microcrystalline glass may be lighter.

In one embodiment, a crystalline phase of the microcrystalline glass mainly is lithium disilicate and petalite, and the total content of the crystalline phase of the microcrystalline glass is 60%-90%, the content of the lithium disilicate is greater than 30%, and the content of the petalite is greater than 30%. By guaranteeing the lithium disilicate and the petalite to be within the range, the crystalline phase content of the microcrystalline glass is great, and the two crystalline phases are balanced in proportion, thereby achieving better strengthening performance of the microcrystalline glass.

In one embodiment, a thickness of the microcrystalline glass is 0.3-1.5 mm. If a plate thickness of the microcrystalline glass is thinner, the microcrystalline glass may be lighter.

An embodiment of the present invention further provides microcrystalline glass, including the glass composition as described above. The microcrystalline glass contains a crystalline phase $Li_2Si_2O_5$ and a crystalline phase $LiAlSi_4O_{10}$. The microcrystalline glass includes all technical features of the glass composition, and thus has all technical effects brought by the glass composition, and details are not described herein again.

The microcrystalline glass also needs to meet: $0.91 \leq W(Li_2Si_2O_5)/W(LiAlSi_4O_{10}) \leq 1.06$, recorded as $E = W(Li_2Si_2O_5)/W(LiAlSi_4O_{10})$, where W represents a mass percentage of the crystalline phase in the microcrystalline glass. By controlling the E value within the above range, crystalline phase amounts of the formed petalite and lithium disilicate are guaranteed to be close to each other, so as to further improve the performance of the microcrystalline glass. Further preferably, $0.97 \leq W(Li_2Si_2O_5)/W(LiAlSi_4O_{10}) \leq 1.03$.

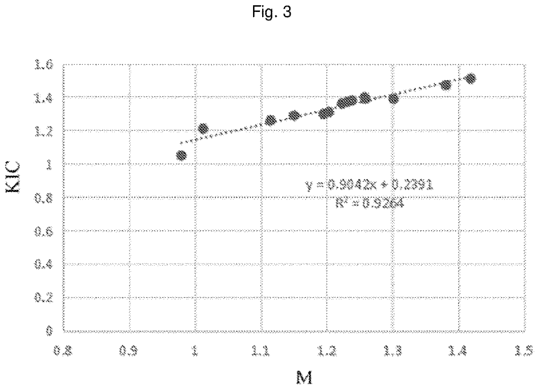

The microcrystalline glass also needs to meet: $10.44 \leq M \leq 12.54$, where $M = 1.3 \times [W(Li_2Si_2O_5)/W(LiAlSi_4O_{10})] \times \{0.86 \times [W(SiO_2)-6 \times W(Al_2O_3)-2 \times W(Li_2O)]+1.83 \times [(W(Li_2O)-W(Al_2O_3))/(W(P_2O_5)+W(ZrO_2))]+1.67 \times [W(ZrO_2)/W(P_2O_5)]+0.25 \times [(W(SiO_2)-6 \times W(Al_2O_3)-2 \times W(Li_2O))/W(Na_2O)]\}$. That is, $M = 1.3 \times E \times (0.86 \times A+1.83 \times B+1.67 \times C+0.25 \times D)$, through researches, it has found that there is a linear relationship between M and fracture toughness KIC of the microcrystalline glass, as shown in Fig. 3, according to the linear relationship, the fracture toughness of the microcrystalline glass is improved by controlling the M value within the above range. Further preferably, $11.85 \leq M \leq 12.54$.

In one embodiment, a thickness of the microcrystalline glass is 0.3-1.5 mm. If a plate thickness of the microcrystalline glass is thinner, the microcrystalline glass may be lighter.

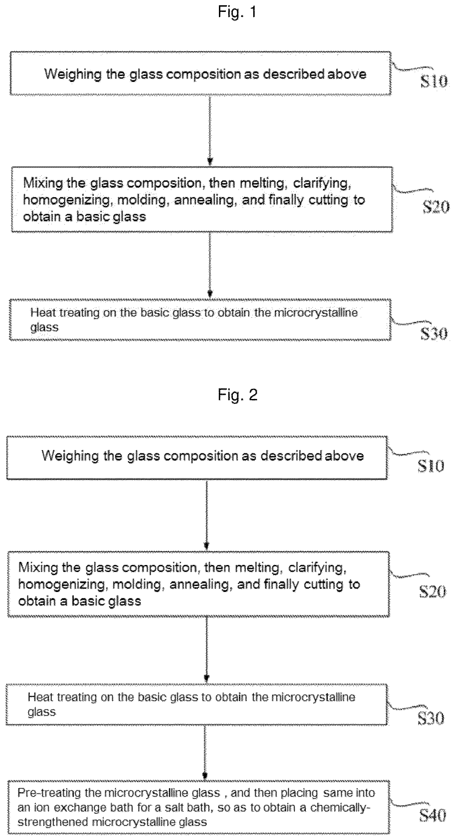

In addition, the present invention further provides a method for preparing microcrystalline glass, used for preparing the above microcrystalline glass. As shown in Fig. 1, the method includes the following steps.

At S10, the glass composition as described above is weighed.

At S20, the glass composition is mixed, melted, clarified, homogenized, molded, annealed and finally cut to obtain a basic glass.

Specifically, in S20, a molding method includes a float molding, an overflow molding, a calendaring molding, or a slit pull-down molding. Other processes such as clarification, homogenization, annealing, and cutting are conventional processes in the field of glass technologies, and are not described herein again. Through the above processes, the thickness of the obtained basic glass is 0.3-1.5mm.

At S30, heat treatment is performed on the basic glass to obtain microcrystalline glass.

Specifically, S30 includes: heating the basic glass from the room temperature to 510-540°C in 20-60 min, and performing the first nucleation treatment, where the time for the first nucleation treatment is 3-8h; heating a temperature to 580-610°C in 5-30 min, and performing the second nucleation treatment, where the time for the second nucleation treatment is 3-8h; heating the temperature to 650-680°C in 5-30 min, and performing crystallization treatment, where the time for the crystallization treatment is 3-8h; and cooling the temperature to the room temperature to obtain the microcrystalline glass.

In one embodiment, as shown in Fig. 2, after S30, the method further includes the following step.

At S40, the microcrystalline glass is pre-treated, and then placed into an ion exchange bath for a salt bath, so as to obtain the chemically-strengthened microcrystalline glass. The ion exchange bath includes, by mass percentage, 20-40% of NaNOs and 60-80% of $KNO_3$. A strengthening temperature of the salt bath is 420-500°C. A strengthening time of the salt bath is 3-8h.

Due to the high crystal content in the microcrystalline glass, there are structural differences between the glass phase and the crystalline phase, thereby forming structural cavities. For example, by using a molten salt containing NaNOs>40 wt%, although $Na^+/Li^+$ may reach a deep ionic depth in a short time during ion exchange, $Na^+$ tends to agglomerate in the cavities between the microcrystalline phase and the glass phase, making it difficult to form compressive stress. The $Na^+/Li^+$ exchange in the glass phase is too fast, and by then the difference between the glass phase and the microcrystalline phase further increases, easily causing an increase in the b value.

The $Na^+/Li^+$ exchange speed in the crystalline phase may be slowed down by using the above strengthening system, such that $Na^+$ aggregation in the cavities between the microcrystalline phase and the glass phase is reduced, thereby effectively forming compressive stress; and the glass phase and the exchange speed may be reduced, and the difference between the glass phase and the crystalline phase is reduced, thereby further reducing the b value of the glass.

It is to be noted that, in S40, the pre-treatment step specifically includes: placing the microcrystalline glass at 300-330°C, and maintaining a reaction at the temperature for 5-20 min. The pre-treatment is a conventional means in the field of glass technologies, and is not described in detail herein.

The present invention further provides an electronic display terminal. The electronic display terminal includes the microcrystalline glass. Specific features of the microcrystalline glass are referred to the above embodiments. Since the current electronic display terminal uses all technical solutions of all the embodiments, the electronic display terminal has at least all beneficial effects brought by the technical solutions of the above embodiments, and details are not described herein again. The microcrystalline glass is used as cover glass or a protective part of the electronic display terminal, or the microcrystalline glass is used as cover glass of an intelligent terminal, or the microcrystalline glass is used as cover glass of solar cells.

The technical solutions of the present invention are described in further detail below with reference to specific embodiments and the drawings, and it is to be understood that the following embodiments are used only to explain the present invention and are not intended to limit the present invention.

Embodiment

(1) A glass composition was weighed, and included, by mass percentage, 72% of $SiO_2$, 7% of $Al_2O_3$, 3% of $P_2O_5$, 12.5% of $Li_2O$, 2% of $Na_2O$, and 3.5% of $ZrO_2$.

(2) The glass composition was mixed, melted, clarified, homogenized, molded, annealed and finally cut to obtain a basic glass.

(3) The basic glass was heated from the room temperature to 530°C in 20 min, nucleation treatment was performed, and the time for the first nucleation treatment was 3h; a temperature was heated to 680°C in 30 min, crystallization treatment was performed, and the time for the crystallization treatment was 3h; and the temperature was cooled to the room temperature to obtain a microcrystalline glass.

(4) An ion exchange bath was provided, the ion exchange bath included, by mass percentage,

40% of NaNOs and 60% of $KNO_3$, the microcrystalline glass was pre-treated, and then placed into the ion exchange bath for a salt bath, so as to obtain the chemically-strengthened microcrystalline glass, a strengthening temperature of the salt bath was 420°C, and a strengthening time of the salt bath was 3h.

Raw materials were weighed according to component proportions of the glass composition of various embodiments shown in Table I1 and Table I2, and the microcrystalline glass and the chemically-strengthened microcrystalline glass in other Embodiment A2 to Embodiment A14 were respectively prepared by referring to a preparation method of Embodiment A1.

Raw materials were weighed according to component proportions of the glass composition of Comparative examples A1 to A5 shown in Table I3, and the microcrystalline glass and the chemically-strengthened microcrystalline glass in Comparative examples A1 to A5 were respectively prepared by referring to a preparation method of Embodiment A1.

The glass compositions of Embodiment A8 and Embodiment A14 were used to implement steps (1)-(3) of the preparation method in Embodiment A1, so as to prepare the microcrystalline glass, and specific process parameters during preparation were referred to Table I4.

The glass compositions of Embodiment A8 and Embodiment A14 were used to implement steps (1)-(4) of the preparation method in Embodiment A1, so as to prepare the chemically-strengthened microcrystalline glass, and specific process parameters of step (4) during preparation were referred to Table I5, and the rest of steps (1)-(3) remained the same as Embodiment A1.

Test example

Test methods and test devices were as follows.

An X-ray diffraction analyzer was used to perform a main crystalline phase test.

A scanning electron microscope was used to perform crystal appearance observation.

A Datacolor650 ultrahigh-precision desktop spectrophotometer colorimeter was used to perform a color b value test.

A spectrophotometer was used to perform a visible light transmittance test by referring to Standard ISO13468-1:1996.

The haze of glass was tested through an ASTMD1003-92 test.

The fracture toughness KIC of the glass was determined by referring to ASTME-1820, in $MPa \cdot m^{1/2}$.

Machine sandpaper drop performance was measured by a controlled drop testing machine for mobile phones, and specific test conditions included: 180-mesh sandpaper, a total weight of 195g, a basic height of 60cm, 5cm increments, once per height, until crushed.

According to the test methods and test devices in the test example, the properties of the microcrystalline glass and the chemically-strengthened microcrystalline glass obtained in Embodiments B1 to B14, the microcrystalline glass and the chemically-strengthened microcrystalline glass obtained in Comparative examples A1 to A5, the microcrystalline glass obtained according to the process parameters in Table I4, or the chemically-strengthened microcrystalline glass obtained according to the process parameters in Table I5 were respectively tested, and filled in the corresponding tables.

It is to be understood that, the test methods and test devices were common ways for evaluating related properties of the glass in the art, are only a means to represent or evaluate the technical solutions and technical effects of the present invention, and other test methods and test devices might be used as well, without affecting final results.

Table I1 Glass composition components and glass performance in Embodiments A1 to A7

| | Embodiment A1 | Embodiment A2 | Embodiment A3 | Embodiment A4 | Embodiment A5 | Embodiment A6 | Embodiment A7 |
|---|---|---|---|---|---|---|---|
| $SiO_2$ | 72 | 72.3 | 72.5 | 72.7 | 72.8 | 73 | 73.2 |
| $Al_2O_3$ | 7 | 7.1 | 7.2 | 7.3 | 7.4 | 7.5 | 7.5 |
| $P_2O_5$ | 3 | 2.9 | 2.8 | 2.7 | 2.6 | 2.5 | 2.4 |
| $Li_2O$ | 12.5 | 12.3 | 12.2 | 12 | 11.7 | 11.5 | 11.5 |
| $Na_2O$ | 2 | 1.8 | 1.6 | 1.5 | 1.4 | 1.4 | 1.3 |
| $ZrO_2$ | 3.5 | 3.6 | 3.7 | 3.8 | 3.9 | 4.1 | 4.1 |
| A | 5 | 5.1 | 4.9 | 4.9 | 5 | 5 | 5.2 |
| B | 0.85 | 0.80 | 0.77 | 0.72 | 0.66 | 0.61 | 0.62 |
| C1 | 1.17 | 1.24 | 1.32 | 1.41 | 1.50 | 1.64 | 1.71 |
| D | 2.50 | 2.83 | 3.06 | 3.27 | 3.57 | 3.57 | 4.00 |

(continued)

|  |  | Embodi ment A1 | Embodi ment A2 | Embodi ment A3 | Embodi ment A4 | Embodi ment A5 | Embodi ment A6 | Embodi ment A7 |
|---|---|---|---|---|---|---|---|---|
| Microcryst alline glass | $Li_2Si_2O_5$/% | 38 | 37 | 36 | 35 | 35 | 36 | 36 |
|  | $LiAlSi_4O_{10}$/ % | 36 | 36 | 35 | 34 | 34 | 35 | 36 |
|  | E | 1.06 | 1.03 | 1.03 | 1.03 | 1.03 | 1.03 | 1.00 |
|  | Crystal size nm | 70 | 68 | 70 | 71 | 68 | 70 | 72 |
|  | Total crystalline phase content | 74 | 73 | 71 | 69 | 69 | 71 | 72 |
|  | b value | 0.35 | 0.34 | 0.33 | 0.33 | 0.33 | 0.33 | 0.32 |
|  | Haze% | 0.14 | 0.13 | 0.13 | 0.13 | 0.13 | 0.12 | 0.12 |
|  | Transmitta nce% of 0.7mm microcryst alline glass at 560nm | 91.3 | 91.3 | 91.4 | 91.5 | 91.5 | 91.6 | 91.6 |
| M |  | 11.56 | 11.53 | 11.49 | 11.65 | 11.92 | 12.09 | 12.29 |
| Fracture toughness KIC MPa·m$^{1/2}$ |  | 1.44 | 1.42 | 1.39 | 1.49 | 1.61 | 1.67 | 1.72 |
| 180-mesh sandpaper drop height/cm |  | 230 | 230 | 225 | 235 | 245 | 250 | 260 |

Table I2 Glass composition components and glass performance in Embodiments A8 to A14

|  | Embodi ment A8 | Embodi ment A9 | Embodi ment A10 | Embodi ment A11 | Embodi ment A12 | Embodi ment A13 | Embodi ment A14 |
|---|---|---|---|---|---|---|---|
| $SiO_2$ | 73.4 | 73.6 | 73.8 | 73.9 | 74 | 74.2 | 74.3 |
| $Al_2O_3$ | 7.6 | 7.8 | 7.9 | 8 | 8.2 | 8.4 | 8.5 |
| $P_2O_5$ | 2.3 | 2.2 | 2.1 | 2.1 | 2 | 1.9 | 1.8 |
| $Li_2O$ | 11.3 | 11 | 10.9 | 10.7 | 10.6 | 10.3 | 10.2 |
| $Na_2O$ | 1.2 | 1.1 | 1 | 0.9 | 0.7 | 0.6 | 0.5 |
| $ZrO_2$ | 4.2 | 4.3 | 4.3 | 4.4 | 4.5 | 4.6 | 4.7 |
| A | 5.2 | 4.8 | 4.6 | 4.5 | 3.6 | 3.2 | 2.9 |
| B | 0.57 | 0.49 | 0.47 | 0.42 | 0.37 | 0.29 | 0.26 |
| C1 | 1.83 | 1.95 | 2.05 | 2.10 | 2.25 | 2.42 | 2.61 |
| D | 4.33 | 4.36 | 4.60 | 5.00 | 5.14 | 5.33 | 5.80 |

(continued)

| Microcryst alline glass | | Embodi ment A8 | Embodi ment A9 | Embodi ment A10 | Embodi ment A11 | Embodi ment A12 | Embodi ment A13 | Embodi ment A14 |
|---|---|---|---|---|---|---|---|---|
| Microcryst alline glass | $Li_2Si_2O_5$/% | 36 | 36 | 35 | 35 | 35 | 33 | 32 |
| | $LiAlSi4O_{10}$ /% | 36 | 36 | 36 | 36 | 36 | 35 | 35 |
| | E | 1.00 | 1.00 | 0.97 | 0.97 | 0.97 | 0.94 | 0.91 |
| | Crystal size nm | 70 | 68 | 70 | 72 | 72 | 70 | 77 |
| | Total crystalline phase content | 72 | 72 | 71 | 71 | 71 | 68 | 67 |
| | b value | 0.32 | 0.32 | 0.33 | 0.33 | 0.34 | 0.35 | 0.36 |
| | Haze% | 0.11 | 0.12 | 0.12 | 0.13 | 0.13 | 0.14 | 0.15 |
| | Transmitta nce% of 0.7mm microcrystalline glass at 560nm | 91.7 | 91.6 | 91.6 | 91.5 | 91.4 | 91.3 | 91.3 |
| M | | 12.54 | 12.20 | 11.86 | 11.85 | 11.14 | 10.62 | 10.44 |
| Fracture toughness KIC MPa·m$^{1/2}$ | | 1.78 | 1.69 | 1.54 | 1.54 | 1.36 | 1.21 | 1.12 |
| 180-mesh sandpaper drop height/cm | | 275 | 255 | 240 | 240 | 215 | 205 | 200 |

Table I3 Glass composition components and glass performance in Comparative examples A1 to A5

| | Comparati veexample A1 | Comparati veexample A2 | Comparati veexample A3 | Comparati veexample A4 | Comparati veexample A5 |
|---|---|---|---|---|---|
| $SiO_2$ | 71.5 | 73 | 72.7 | 73.1 | 72.5 |
| $Al_2O_3$ | 8 | 7 | 8.3 | 8 | 8 |
| $P_2O_5$ | 3 | 3 | 3.4 | 1.7 | 3.8 |
| $Li_2O$ | 11.5 | 11.5 | 10 | 11.5 | 10.9 |
| $Na_2O$ | 1.2 | 1.2 | 0.7 | 0.9 | 1.1 |
| $ZrO_2$ | 4.8 | 4.3 | 4.9 | 4.8 | 3.7 |
| A | 0.5 | 8 | 2.9 | 2.1 | 2.7 |
| B | 0.45 | 0.62 | 0.20 | 0.54 | 0.39 |
| C1 | 1.60 | 1.43 | 1.44 | 2.82 | 0.97 |
| D | 0.42 | 6.67 | 4.14 | 2.33 | 2.45 |

(continued)

| | | Comparative example A1 | Comparative example A2 | Comparative example A3 | Comparative example A4 | Comparative example A5 |
|---|---|---|---|---|---|---|
| Microcrystalline glass | $Li_2Si_2O_5$/% | 37 | 18 | 26 | 21 | 39 |
| | $LiAlSi_4O_{10}$/% | 29 | 30 | 35 | 38 | 23 |
| | E | 1.28 | 0.60 | 0.74 | 0.55 | 1.70 |
| | Crystal size nm | 129 | 65 | 143 | 136 | 126 |
| | Total crystalline phase content | 66 | 48 | 61 | 59 | 62 |
| | b value | 0.92 | 0.41 | 1.75 | 0.57 | 0.62 |
| | Haze% | 0.38 | 0.13 | 0.66 | 0.25 | 0.31 |
| | Transmittance % of 0.7mm microcrystallin e glass at 560nm | 88.9 | 91.3 | 87.7 | 89.9 | 89.5 |
| Fracture toughness KIC MPa·m$^{1/2}$ | | 0.72 | 0.43 | 0.71 | 0.68 | 0.64 |
| 180-mesh sandpaper drop height/cm | | 165 | 130 | 165 | 160 | 155 |

Table I4 Process parameter and performance of microcrystalline glass prepared by glass composition in Embodiments A8 to A14

| | | Glass composition of Embodiment A8 | | | Glass composition of Embodiment A14 | | |
|---|---|---|---|---|---|---|---|
| Treatment system | Nucleation treatment | 20min, 530°C, 3h | 60min, 530°C, 6h | 40min, 570°C, 8h | 20min, 530°C, 3h | 40min, 530o°C, 6h | 60min, 570°C, 8h |
| | Crystallization treatment | 30min, 680°C, 3h | 5min, 680°C, 8h | 16min, 720°C, 8h | 30min, 680°C, 3h | 5min, 680°C, 8h | 15min, 720°C, 8h |
| Crystalline phase | $Li_2Si_2O_5$/% | 36 | 46 | 47 | 32 | 41 | 44 |
| | $LiAlSi_4O_{10}$/% | 36 | 46 | 47 | 35 | 43 | 45 |
| | E | 1.00 | 1.00 | 1.00 | 0.91 | 0.95 | 0.98 |
| Crystal size nm | | 70 | 83 | 90 | 77 | 87 | 93 |
| Total crystalline phase content | | 72 | 92 | 94 | 67 | 84 | 89 |
| b value after heat treatment | | 0.32 | 0.33 | 0.34 | 0.36 | 0.37 | 0.39 |
| Haze% | | 0.11 | 0.12 | 0.13 | 0.15 | 0.16 | 0.17 |
| Transmittance% of 0.7mm microcrystalline glass at 560nm | | 91.7 | 91.6 | 91.5 | 91.3 | 91.2 | 91 |

The time for the nucleation treatment and crystallization treatment represented the time for heating, the temperature represented a target heating temperature, and the time represented a treatment time.

Table I5 Process parameter and performance of the chemically-strengthened microcrystalline glass prepared by glass composition in Embodiments A8 to A14

| Glass composition of Embodiment A8 | | | | | | | | | |
|---|---|---|---|---|---|---|---|---|---|
| Chemical strengthening system | Molten salt concentration | $NaNO_3$ 40%, $KNO_3$ 60% | $NaNO_3$ 40%, $KNO_3$ 60% | $NaNO_3$ 40%, $KNO_3$ 60% | $NaNO_3$ 40%, $KNO_3$ 60% | $NaNO_3$ 20%, $KNO_3$ 80% | $NaNO_3$ 20%, $KNO_3$ 80% | $NaNO_3$ 20%, $KNO_3$ 80% | $NaNO_3$ 20%, $KNO_3$ 80% |
| | Strengthening temperature, time | 420°C, 3h | 420°C, 8h | 500°C, 3h | 500°C, 8h | 420°C, 3h | 420°C, 8h | 500°C, 3h | 500°C, 8h |
| 180-mesh sandpaper drop height/cm | | 275 | 295 | 290 | 300 | 280 | 300 | 295 | 300 |
| Glass composition of Embodiment A14 | | | | | | | | | |
| Chemical strengthening system | Molten salt concentration | $NaNO_3$ 40%, $KNO_3$ 60% | $NaNO_3$ 40%, $KNO_3$ 60% | $NaNO_3$ 40%, $KNO_3$ 60% | $NaNO_3$ 40%, $KNO_3$ 60% | $NaNO_3$ 20%, $KNO_3$ 80% | $NaNO_3$ 20%, $KNO_3$ 80% | $NaNO_3$ 20%, $KNO_3$ 80% | $NaNO_3$ 20%, $KNO_3$ 80% |
| | Strengthening temperature, time | 420°C, 3h | 420°C, 8h | 500°C, 3h | 500°C, 8h | 420°C, 3h | 420°C, 8h | 500°C, 3h | 500°C, 8h |
| 180-mesh sandpaper drop height/cm | | 200 | 220 | 205 | 230 | 205 | 225 | 210 | 230 |

From performance test results of the microcrystalline glass of various embodiments shown in Table I1, Table I2, Table I4, and Table I5, it might be seen that, by using the Embodiments A1-A14 of the technical solutions of the present invention, the crystalline phase lithium disilicate $Li_2Si_2O_5$ in the microcrystalline glass obtained after heat treatment was greater than 30%, the crystalline phase petalite $LiAlSi_4O_{10}$ was greater than 30%, and the total crystalline phase in the microcrystalline glass was greater than 68%. The transmittance of the microcrystalline glass with 0.7mm was greater than 91%, the haze was less than 0.17, and the b value was less than 0.4. An average crystal size of the crystal particles of the microcrystalline glass was less than 100 nm. The fracture toughness KIC of the microcrystalline glass was greater than 1.1MPa·m$^{1/2}$, and a drop resistance height was greater than 200 cm.

From Table I3, it might be seen that, in Comparative example A1, $SiO_2$ = 71.5%, A = 0.5, and D = 0.42, failing to meet requirements of the glass composition of the present invention, in the heat-treated microcrystalline glass, $Li_2Si_2O_5/LiAlSi_4O_{10}$ = 0.81, crystal size >100nm; the transmittance was low, the b value was too large, the haze was large; and the chemically-strengthened mechanical property was relatively poor.

In Comparative example A2, A = 8, and D = 6.67, failing to meet requirements of the glass composition of the present invention, the microcrystalline phase content in the heat-treated microcrystalline glass was less, $Li_2Si_2O_5/LiAlSi_4O_{10}$ = 0.6, and the chemically-strengthened mechanical property was relatively poor.

In Comparative example A3, $Li_2O$ = 10%, and B = 0.2, failing to meet requirements of the glass composition of the present invention, the microcrystalline phase content in the heat-treated microcrystalline glass was less, $Li_2Si_2O_5/LiAlSi_4O_{10}$ = 0.74, crystal size >100nm; the transmittance was low, the b value was too large, the haze was large; and the chemically-strengthened mechanical property was relatively poor.

In Comparative example A4, $P_2O_5$ = 1.7%, A = 2.1, C1 = 2.82, and D = 2.33, failing to meet requirements of the glass composition of the present invention, the microcrystalline phase content in the heat-treated microcrystalline glass was less, $Li_2Si_2O_5/LiAlSi_4O_{10}$ = 0.55, crystal size >100nm; the transmittance was low, the b value was too large, the haze was large; and the chemically-strengthened mechanical property was relatively poor.

In Comparative example A5, $P_2O_5$ = 3.8%, A = 2.7, C1 = 0.97, and D = 2.45, failing to meet requirements of the glass composition of the present invention, the microcrystalline phase content in the heat-treated microcrystalline glass was less, $Li_2Si_2O_5/LiAlSi_4O_{10}$ = 1.7, crystal size >100nm; the transmittance was low, the b value was too large, the haze was large; and the chemically-strengthened mechanical property was relatively poor.

Compared to the fracture toughness KIC value (0.43-0.72MPa·m$^{1/2}$) of the chemically-strengthened microc-

16

rystalline glass in the comparative examples, the fracture toughness KIC value (1.012-1.78MPa·m$^{1/2}$) of the chemically-strengthened microcrystalline glass in the embodiments of the present invention was higher, it indicated that the situations of a reduced crystal content and a damaged interlocking structure of two crystalline phases occurred in the microcrystalline glass in the embodiments of the present invention during the chemical strengthening process were significantly improved. Compared to the high b value and high haze of the microcrystalline glass in the comparative examples, the b value and haze of the microcrystalline glass in the embodiments of the present invention were significantly lower, it indicated that the reduction of the b value and haze of the microcrystalline glass in the embodiments of the present invention was realized. Finally, the strengthening performance of the obtained the chemically-strengthened microcrystalline glass was excellent.

Embodiment

(1) A glass composition was weighed, and included, by mass percentage, 71.5% of $SiO_2$, 8.7% of $Al_2O_3$, 3% of $P_2O_5$, 0.1% of $B_2O_3$, 10.2% of $Li_2O$, 1.5% of $Na_2O$, and 5% of $ZrO_2$, A = -1.1, B = 0.19, and $C_2$ = 1.57.

(2) The glass composition was mixed , melted, clarified, homogenized, molded, annealed and finally cut to obtain a basic glass.

(3) The basic glass was heated from the room temperature to 510°C in 20 min, the first nucleation treatment was performed, and the time for the first nucleation treatment was 3h; a temperature was heated to 580°C in 5 min, the second nucleation treatment was performed, and the time for the second nucleation treatment was 3h; the temperature was heated to 650°C in 30 min, crystallization treatment was performed, and the time for the crystallization treatment was 3h; and the temperature was cooled to the room temperature to obtain a microcrystalline glass.

(4) The microcrystalline glass was pre-treated, and then placed into an ion exchange bath for a salt bath, so as to obtain the chemically-strengthened microcrystalline glass, the ion exchange bath included, by mass percentage, 20% of $NaNOs$ and 80% of $KNO_3$, a strengthening temperature of the salt bath was 420°C, and a strengthening time of the salt bath was 3h.

Raw materials were weighed according to component proportions of the glass composition of various embodiments shown in Table II1 and Table II2, and microcrystalline glass and the chemically-strengthened microcrystalline glass in other Embodiment B2 to Embodiment B15 were respectively prepared by referring to a preparation method of Embodiment B1.

Raw materials were weighed according to component proportions of the glass composition of Comparative examples B1 to B7 shown in Table II3, and microcrystalline glass and the chemically-strengthened microcrystalline glass in Comparative examples B1 to B7 were respectively prepared by referring to a preparation method of Embodiment B1.

The glass compositions of Embodiments B1 and B9 were used to implement steps (1)-(3) of the preparation method in Embodiment B1, so as to prepare the microcrystalline glass, and specific process parameters during preparation were referred to Table II4.

Test example

Test methods and test devices were as follows.

An X-ray diffraction analyzer was used to perform a main crystalline phase test.

A scanning electron microscope was used to perform crystal appearance observation.

A Datacolor650 ultrahigh-precision desktop spectrophotometer colorimeter was used to perform a color b value test.

A spectrophotometer was used to perform a visible light transmittance test by referring to Standard ISO13468-1:1996.

The haze of glass was tested through an ASTMD1003-92 test.

Machine sandpaper drop performance was measured by a controlled drop testing machine for mobile phones, and specific test conditions included: 180-mesh sandpaper, a total weight of 195g, a basic height of 60cm, 5cm increments, once per height, until crushed.

According to the test methods and test devices in the test example, the properties of the microcrystalline glass and the chemically-strengthened microcrystalline glass obtained in Embodiments B1 to B15, the microcrystalline glass and the chemically-strengthened microcrystalline glass obtained in Comparative examples B1 to B7, or the microcrystalline glass obtained according to the process parameters in Table II4 were respectively tested, and filled in the corresponding tables.

It is to be understood that, the test methods and test devices were common ways for evaluating related properties of the glass in the art, are only a means to represent or evaluate the technical solutions and technical effects of the present invention, and other test methods and test devices might be used as well, without affecting final results.

Table II1 Glass composition components and glass performance in Embodiments B1 to B8

| | | Embod iment B1 | Embod iment B2 | Embod iment B3 | Embod iment B4 | Embod iment B5 | Embod iment B6 | Embod iment B7 | Embod iment B8 |
|---|---|---|---|---|---|---|---|---|---|
| $SiO_2$ | | 71.5 | 71.7 | 72 | 72.1 | 72.3 | 72.5 | 72.8 | 73 |
| $Al_2O_3$ | | 8.7 | 8.6 | 8.4 | 8.4 | 8.1 | 8 | 7.9 | 7.8 |
| $P_2O_5$ | | 3 | 2.9 | 2.8 | 2.7 | 2.6 | 2.5 | 2.5 | 2.4 |
| $B_2O_3$ | | 0.1 | 0.2 | 0.3 | 0.3 | 0.5 | 0.5 | 0.6 | 0.6 |
| $Li_2O$ | | 10.2 | 10.3 | 10.5 | 10.6 | 10.8 | 11 | 11 | 11.2 |
| $Na_2O$ | | 1.5 | 1.4 | 1.3 | 1.2 | 1.1 | 1.1 | 1 | 0.9 |
| $ZrO_2$ | | 5 | 4.9 | 4.7 | 4.7 | 4.6 | 4.4 | 4.2 | 4.1 |
| A | | -1.1 | -0.5 | 0.6 | 0.5 | 2.1 | 2.5 | 3.4 | 3.8 |
| B | | 0.19 | 0.22 | 0.28 | 0.30 | 0.38 | 0.43 | 0.46 | 0.52 |
| $C_2$ | | 1.57 | 1.48 | 1.36 | 1.41 | 1.19 | 1.16 | 0.96 | 0.96 |
| Microcry stalline glass | $Li_2Si_2O_5$/ % | 30 | 32 | 33 | 35 | 37 | 38 | 37 | 38 |
| | $LiAlSi_4O_{10}$/% | 33 | 34 | 35 | 35 | 36 | 37 | 37 | 37 |
| | Crystal size nm | 77 | 75 | 72 | 70 | 72 | 70 | 72 | 70 |
| | Total crystallin e phase content | 63 | 66 | 68 | 70 | 73 | 75 | 74 | 75 |
| | b value | 0.37 | 0.36 | 0.35 | 0.34 | 0.34 | 0.33 | 0.32 | 0.32 |
| | Haze% | 0.14 | 0.14 | 0.13 | 0.13 | 0.12 | 0.12 | 0.11 | 0.11 |
| | Transmitt ance% of 0.7mm microcry stalline glass at 560nm | 91.3 | 91.3 | 91.4 | 91.4 | 91.5 | 91.5 | 91.6 | 91.6 |
| 180-mesh sandpaper drop height/cm | | 200 | 210 | 215 | 220 | 220 | 225 | 230 | 235 |

Table II2 Glass composition components and glass performance in Embodiments B9 to B15

| | Embodi ment B9 | Embodi ment B10 | Embodi ment B11 | Embodi ment B12 | Embodi ment B13 | Embodi ment B14 | Embodi ment B15 |
|---|---|---|---|---|---|---|---|
| $SiO_2$ | 73.1 | 73.4 | 73.5 | 73.8 | 74 | 74.2 | 74.5 |
| $Al_2O_3$ | 7.8 | 7.7 | 7.7 | 7.6 | 7.5 | 7.4 | 7.3 |

(continued)

| | | Embodiment B9 | Embodiment B10 | Embodiment B11 | Embodiment B12 | Embodiment B13 | Embodiment B14 | Embodiment B15 |
|---|---|---|---|---|---|---|---|---|
| $P_2O_5$ | | 2.3 | 2.2 | 2.1 | 2.1 | 2 | 1.9 | 1.7 |
| $B_2O_3$ | | 0.7 | 0.7 | 0.7 | 0.7 | 0.8 | 0.9 | 1 |
| $Li_2O$ | | 11.3 | 11.4 | 11.5 | 11.6 | 11.8 | 11.9 | 12 |
| $Na_2O$ | | 0.8 | 0.7 | 0.7 | 0.6 | 0.5 | 0.5 | 0.4 |
| $ZrO_2$ | | 4 | 3.9 | 3.8 | 3.6 | 3.4 | 3.2 | 3.1 |
| A | | 3.7 | 4.4 | 4.3 | 5 | 5.4 | 6 | 6.7 |
| B | | 0.56 | 0.61 | 0.64 | 0.70 | 0.80 | 0.88 | 0.98 |
| $C_2$ | | 0.83 | 0.82 | 0.81 | 0.71 | 0.50 | 0.26 | 0.06 |
| Microcrystalline glass | $Li_2Si_2O_5$/% | 39 | 37 | 37 | 36 | 35 | 35 | 33 |
| | $LiAlSi_4O_{10}$/ % | 38 | 35 | 34 | 34 | 34 | 33 | 32 |
| | Crystal size nm | 70 | 72 | 70 | 68 | 69 | 66 | 65 |
| | Total crystalline phase content | 77 | 72 | 71 | 70 | 69 | 68 | 65 |
| | b value | 0.31 | 0.31 | 0.32 | 0.33 | 0.34 | 0.34 | 0.35 |
| | Haze% | 0.1 | 0.11 | 0.12 | 0.12 | 0.13 | 0.13 | 0.14 |
| | Transmittance% of 0.7mm microcrystalline glass at 560nm | 91.7 | 91.6 | 91.6 | 91.5 | 91.4 | 91.3 | 91.3 |
| 180-mesh sandpaper drop height/cm | | 240 | 230 | 225 | 220 | 215 | 210 | 205 |

Table II3 Glass composition components and glass performance in Comparative examples B1 to B7

| | Comparative example B1 | Comparative example B2 | Comparative example B3 | Comparative example B4 | Comparative example B5 | Comparative example B6 | Comparative example B7 |
|---|---|---|---|---|---|---|---|
| $SiO_2$ | 73.2 | 73.5 | 72.2 | 74.7 | 73.2 | 72.2 | 72.2 |
| $Al_2O_3$ | 8 | 7.9 | 9.5 | 7.1 | 7.5 | 9 | 7.8 |
| $P_2O_5$ | 2.4 | 2.3 | 2.8 | 2.8 | 2.4 | 3.4 | 2.2 |
| $B_2O_3$ | 0 | 1.1 | 0.4 | 0.8 | 0.4 | 0.6 | 0.2 |
| $Li_2O$ | 11.6 | 11.2 | 10 | 10 | 13 | 8.5 | 11.9 |
| $Na_2O$ | 1 | 1.2 | 1.4 | 0.9 | 0.8 | 1.8 | 0.9 |
| $ZrO_2$ | 3.8 | 2.8 | 3.7 | 3.7 | 2.7 | 4.5 | 4.8 |
| A | 2 | 3.7 | -4.8 | 12.1 | 2.2 | 1.2 | 1.6 |
| B | 0.58 | 0.65 | 0.08 | 0.45 | 1.08 | -0.06 | 0.59 |
| $C_2$ | 1.58 | -0.22 | 0.89 | 0.46 | 0.63 | 0.79 | 1.91 |

(continued)

| | | Compar ative example B1 | Compar ative example B2 | Compar ative example B3 | Compar ative example B4 | Compar ative example B5 | Compar ative example B6 | Compar ative example B7 |
|---|---|---|---|---|---|---|---|---|
| Microcryst alline glass | $Li_2Si_2O_5$/% | 32 | 38 | 8 | 13 | 35 | 6 | 32 |
| | $LiAlSi4O_{10}$ /% | 37 | 30 | 37 | 18 | 37 | 25 | 39 |
| | Crystal size nm | 159 | 155 | 195 | 65 | 143 | 66 | 122 |
| | Total crystalline phase content | 69 | 68 | 45 | 31 | 72 | 31 | 71 |
| | b value | 1.92 | 1.56 | 2.28 | 0.45 | 3.45 | 0.42 | 1.23 |
| | Haze% | 0.53 | 0.43 | 0.87 | 0.12 | 0.86 | 0.11 | 0.31 |
| | Transmitta nce% of 0.7mm microcryst alline glass at 560nm | 87.1 | 87.4 | 85.2 | 91.3 | 85.7 | 91.2 | 88.3 |
| 180-mesh sandpaper drop height/cm | | 210 | 190 | 150 | 105 | 220 | 100 | 220 |

Table II4 Process parameter and performance of microcrystalline glass prepared by glass composition in Embodiments B1 and B9

| | | Glass composition of Embodiment B1 | | | | Glass composition of Embodiment B9 | | | |
|---|---|---|---|---|---|---|---|---|---|
| Treatment system | First nucleation treatment | 20min, 510°C , 3h | 60min, 510°C , 8h | 40min, 540°C , 3h | 40min, 540°C , 8h | 20min, 510°C , 3h | 40min, 510°C , 8h | 60min, 540°C , 3h | 40min, 540°C , 8h |
| | Second nucleation treatment | 5min, 580°C , 3h | 30min, 580°C , 8h | 17min, 610°C , 3h | 16min, 610°C , 8h | 5min, 580°C , 3h | 17min, 580°C , 8h | 5min, 610°C , 3h | 30min, 610°C , 8h |
| | Crystallizatio n treatment | 30min, 650°C , 3h | 5min, 650°C , 8h | 16min, 680°C , 3h | 17min, 680°C , 8h | 30min, 650°C , 3h | 5min, 650°C , 8h | 15min, 680°C , 3h | 16min, 680°C , 8h |
| Crystallin e phase | $Li_2Si_2O_5$/% | 30 | 37 | 36 | 41 | 39 | 43 | 42 | 45 |
| | $LiAlSi_4O_{10}$/% | 33 | 40 | 38 | 45 | 38 | 41 | 40 | 43 |
| Crystal size nm | | 77 | 85 | 86 | 96 | 70 | 80 | 82 | 89 |
| Total crystalline phase content | | 63 | 77 | 74 | 86 | 77 | 84 | 82 | 88 |
| b value after heat treatment | | 0.37 | 0.38 | 0.39 | 0.4 | 0.31 | 0.32 | 0.33 | 0.35 |
| Haze% | | 0.14 | 0.16 | 0.15 | 0.17 | 0.1 | 0.13 | 0.12 | 0.14 |

(continued)

| | Glass composition of Embodiment B1 | | | | Glass composition of Embodiment B9 | | | |
|---|---|---|---|---|---|---|---|---|
| Transmittance% of 0.7mm microcrystalline glass at 560nm | 91.3 | 91.2 | 91.3 | 91.1 | 91.7 | 91.6 | 91.7 | 91.5 |

The time for the first nucleation treatment, the second nucleation treatment, and crystallization treatment represented the time for heating, the temperature represented a target heating temperature, and the time represented a treatment time.

From performance test results of the microcrystalline glass of various embodiments shown in Table II1, Table II2, and Table II4, it might be seen that, by using the Embodiments B1-B15 of the technical solutions of the present invention, the lithium disilicate $Li_2Si_2O_5$ in the microcrystalline glass accounted for 30%-45%, the petalite $LiAlSi_4O_{10}$ accounted for 30%-45%, the total crystalline phase accounted for 60%-90% of the microcrystalline glass, crystal sizes were uniform, and an average crystal size was less than 100 nm. The transmittance of the 0.7mm microcrystalline glass at a wavelength of 560nm was greater than 91%, the haze was less than 0.17, the b value was less than 0.5, and the drop resistance height was greater than 200 cm.

From Table II3, it might be seen that, in Comparative example 1, $B_2O_3$ = 0%, and $C_2$ = 1.58, failing to meet requirements of the glass composition of the present invention, the microcrystalline phase content in the heat-treated microcrystalline glass was less, crystal size >100nm; the transmittance was low, the b value was too large, and the haze was large.

In Comparative example B2, $B_2O_3$ = 1.1%, but $C_2$ = -0.22, failing to meet requirements of the glass composition of the present invention, the microcrystalline phase content in the heat-treated microcrystalline glass was less, crystal size >100nm; the transmittance was low, the b value was too large, the haze was large, and drop resistance was poor.

In Comparative example B3, $Al_2O_3$ = 9.5%, A = -4.8, and B = 0.08, failing to meet requirements of the glass composition of the present invention, the microcrystalline phase content in the heat-treated microcrystalline glass was less, crystal size >100nm; the transmittance was low, the b value was too large, the haze was large, and drop resistance was poor.

In Comparative example B4, $SiO_2$ = 74.7%, and A = 12.1, failing to meet requirements of the glass composition of the present invention, the microcrystalline phase content in the heat-treated microcrystalline glass was less, and drop resistance was poor.

In Comparative example B5, $Li_2O$ = 13%, and B = 1.08, failing to meet requirements of the glass composition of the present invention, the microcrystalline phase content in the heat-treated microcrystalline glass was less, crystal size >100nm; the transmittance was low, the b value was too large, and the haze was large.

In Comparative example B6, $Al_2O_3$ = 9%, and B = -0.06, failing to meet requirements of the glass composition of the present invention, the microcrystalline phase content in the heat-treated microcrystalline glass was less, and drop resistance was poor.

In Comparative example B7, although the glass components were within the requirements of the present invention, $C_2$ = 1.91, failing to meet requirements of the glass composition of the present invention, the microcrystalline phase content in the heat-treated microcrystalline glass was less, crystal size >100nm; the transmittance was low, the b value was too large, and the haze was large.

Compared to the b value and haze of the microcrystalline glass in the comparative examples, the b value of the microcrystalline glass in the embodiments of the present invention significantly reduced, the haze significantly reduced, it indicated that the problems of the relatively-large b value and relatively-high haze of existing prepared microcrystalline glass can be effectively solved in the embodiments of the present invention, and the strengthening performance of the obtained microcrystalline glass was excellent.

Embodiment

(1) A glass composition was weighed, and included, by mass percentage, 71.5% of $SiO_2$, 6.2% of $Al_2O_3$, 1.7% of $P_2O_5$, 0.1% of $B_2O_3$, 12% of $Li_2O$, 2% of $Na_2O$, 1.5% of CaO, and 5% of $ZrO_2$, A = 10.3, B = 0.87, and $C_3$ = 2.19.

(2) The glass composition was mixed, melted, clarified, homogenized, molded, annealed and finally cut to obtain a basic glass.

(3) The basic glass was heated from the room temperature to 510°C in 20 min, a first nucleation treatment was performed, and the time for the first nucleation treatment was 3h; the temperature was heated to 580°C in 5 min, a second nucleation treatment was performed, and the time for the second nucleation treatment was 3h; the temperature was heated to 650°C in 30 min, a crystallization treatment was performed, and the time for the crystallization treatment was 3h; and the temperature was cooled to the room temperature to obtain a microcrystalline glass.

(4) The microcrystalline glass was pre-treated, and then placed into an ion exchange bath for a salt bath, so as to obtain the chemically-strengthened microcrystalline glass, the ion exchange bath included, by mass percentage, 40% of NaNOs and 60% of $KNO_3$, a strengthening temperature of the salt bath was 500°C, and a strengthening time of the salt bath was 8h.

Raw materials were weighed according to component proportions of the glass composition of various embodiments shown in Table III1 and Table III2, and microcrystalline glass and the chemically-strengthened microcrystalline glass in other Embodiment C2 to Embodiment C16 were respectively prepared by referring to a preparation method of Embodiment C1.

Raw materials were weighed according to component proportions of the glass composition of Comparative examples C1 to C6 shown in Table III3, and microcrystalline glass and the chemically-strengthened microcrystalline glass in Comparative examples C1 to C6 were respectively prepared by referring to a preparation method of Embodiment C1.

The glass compositions of Embodiments C1 and C8 were used to implement steps (1)-(3) of the preparation method in Embodiment C1, so as to prepare the microcrystalline glass, and specific process parameters during preparation were referred to Table III4.

The glass compositions of Embodiment C1 and C8 were used to implement steps (1)-(4) of the preparation method in Embodiment C1, so as to prepare the chemically-strengthened microcrystalline glass, and specific process parameters of step (4) during preparation were referred to Table III5, and the rest of steps (1)-(3) remained the same as Embodiment C1.

Test example

Test methods and test devices were as follows.
An X-ray diffraction analyzer was used to perform a main crystalline phase test.
A scanning electron microscope was used to perform crystal appearance observation.
A Datacolor650 ultrahigh-precision desktop spectrophotometer colorimeter was used to perform a color b value test.
A spectrophotometer was used to perform a visible light transmittance test by referring to Standard ISO13468-1:1996.
The haze of glass was tested through an ASTMD1003-92 test.
Machine sandpaper drop performance was measured by a controlled drop testing machine for mobile phones, and specific test conditions included: 180-mesh sandpaper, a total weight of 195g, a basic height of 60cm, 5cm increments, once per height, until crushed.
According to the test methods and test devices in the test example, the properties of the microcrystalline glass and the chemically-strengthened microcrystalline glass obtained in Embodiments C1 to C16, the microcrystalline glass and the chemically-strengthened microcrystalline glass obtained in Comparative examples C1 to C6, the microcrystalline glass obtained according to the process parameters in Table III4, or the chemically-strengthened microcrystalline glass obtained according to the process parameters in Table III5 were respectively tested, and filled in the corresponding tables.
It is to be understood that, the test methods and test devices were common ways for evaluating related properties of the glass in the art, are only a means to represent or evaluate the technical solutions and technical effects of the present invention, and other test methods and test devices might be used as well, without affecting final results.

Table III1 Glass composition components and glass performance in Embodiments C1 to C8

| | Embodiment C1 | Embodiment C2 | Embodiment C3 | Embodiment C4 | Embodiment C5 | Embodiment C6 | Embodiment C7 | Embodiment C8 |
|---|---|---|---|---|---|---|---|---|
| $SiO_2$ | 71.5 | 71.7 | 71.9 | 72 | 72.1 | 72.3 | 72.5 | 72.6 |
| $Al_2O_3$ | 6.2 | 6.3 | 6.5 | 6.8 | 7 | 7.2 | 7.5 | 7.6 |

(continued)

| | | Embo diment C1 | Embo diment C2 | Embo diment C3 | Embo diment C4 | Embo diment C5 | Embo diment C6 | Embo diment C7 | Embo diment C8 |
|---|---|---|---|---|---|---|---|---|---|
| $P_2O_5$ | | 1.7 | 1.8 | 1.9 | 2 | 2 | 2.1 | 2.2 | 2.2 |
| $B_2O_3$ | | 0.1 | 0.2 | 0.3 | 0.4 | 0.4 | 0.5 | 0.6 | 0.7 |
| $Li_2O$ | | 12 | 11.9 | 11.8 | 11.7 | 11.7 | 11.7 | 11.6 | 11.5 |
| $Na_2O$ | | 2 | 1.9 | 1.8 | 1.7 | 1.6 | 1.5 | 1.1 | 1 |
| CaO | | 1.5 | 1.4 | 1.3 | 1 | 0.9 | 0.7 | 0.6 | 0.6 |
| $ZrO_2$ | | 5 | 4.8 | 4.5 | 4.4 | 4.3 | 4 | 3.9 | 3.8 |
| A | | 10.3 | 10.1 | 9.3 | 7.8 | 6.7 | 5.7 | 4.3 | 4 |
| B | | 0.87 | 0.85 | 0.83 | 0.77 | 0.75 | 0.74 | 0.67 | 0.65 |
| $C_3$ | | 2.19 | 2.13 | 2.00 | 2.13 | 2.13 | 2.06 | 2.06 | 2.13 |
| Microcrystalli ne glass | $Li_2Si_2O_5$/ % | 32 | 32 | 33 | 35 | 36 | 38 | 37 | 38 |
| | $LiAlSi_4O$ 10/% | 33 | 35 | 35 | 35 | 37 | 37 | 38 | 38 |
| | Crystal size nm | 76 | 74 | 70 | 72 | 70 | 70 | 72 | 70 |
| | Total crystallin e phase content | 65 | 67 | 68 | 70 | 73 | 75 | 75 | 76 |
| | b value | 0.39 | 0.38 | 0.37 | 0.36 | 0.35 | 0.34 | 0.33 | 0.32 |
| | Transmit tance% of 0.7mm microcry stalline glass at 560nm | 91.2 | 91.3 | 91.4 | 91.4 | 91.5 | 91.6 | 91.6 | 91.7 |
| | Haze% | 0.16 | 0.15 | 0.14 | 0.13 | 0.13 | 0.13 | 0.12 | 0.1 |
| Chemically-st rengthened microcrystalli ne glass | $Li_2Si_2O_5$/ % | 30 | 30 | 31 | 32 | 33 | 35 | 34 | 36 |
| | $LiAlSi_4O$ 10/% | 30 | 32 | 32 | 32 | 34 | 34 | 35 | 35 |
| | Total crystallin e phase content | 60 | 62 | 63 | 64 | 67 | 69 | 69 | 71 |
| 180-mesh sandpaper drop height/cm | | 200 | 215 | 215 | 220 | 220 | 225 | 230 | 235 |

Table III2 Glass composition components and glass performance in Embodiments C9 to C16

| | | Embo diment C9 | Embo diment C10 | Embo diment C11 | Embo diment C12 | Embo diment C13 | Embo diment C14 | Embo diment C15 | Embo diment C16 |
|---|---|---|---|---|---|---|---|---|---|
| $SiO_2$ | | 72.7 | 72.8 | 73 | 73.2 | 73.5 | 73.6 | 73.7 | 74 |
| $Al_2O_3$ | | 7.7 | 7.9 | 8 | 8.1 | 8.2 | 8.3 | 8.4 | 8.5 |
| $P_2O_5$ | | 2.3 | 2.3 | 2.3 | 2.4 | 2.4 | 2.5 | 2.5 | 2.6 |
| $B_2O_3$ | | 0.8 | 0.8 | 0.9 | 1 | 1.1 | 1.2 | 1.4 | 1.7 |
| $Li_2O$ | | 11.4 | 11.3 | 11.3 | 11 | 10.8 | 10.6 | 10.5 | 10 |
| $Na_2O$ | | 0.9 | 0.8 | 0.6 | 0.5 | 0.4 | 0.3 | 0.2 | 0.1 |
| CaO | | 0.5 | 0.5 | 0.4 | 0.4 | 0.3 | 0.3 | 0.2 | 0.1 |
| $ZrO_2$ | | 3.7 | 3.6 | 3.5 | 3.4 | 3.3 | 3.2 | 3.1 | 3 |
| A | | 3.7 | 2.8 | 2.4 | 2.6 | 2.7 | 2.6 | 2.3 | 3 |
| B | | 0.62 | 0.58 | 0.57 | 0.50 | 0.46 | 0.40 | 0.38 | 0.27 |
| $C_3$ | | 2.13 | 2.07 | 2.21 | 2.14 | 2.31 | 2.23 | 2.64 | 3.22 |
| Microcrystalli ne glass | $Li_2Si_2O_5$/ % | 39 | 37 | 37 | 35 | 35 | 35 | 34 | 33 |
| | $LiAlSi_4O$ 10/% | 37 | 36 | 35 | 35 | 34 | 33 | 33 | 32 |
| | Crystal size nm | 72 | 72 | 70 | 68 | 70 | 74 | 70 | 72 |
| | Total crystallin e phase content | 76 | 73 | 72 | 70 | 69 | 68 | 67 | 65 |
| | b value | 0.33 | 0.34 | 0.34 | 0.35 | 0.36 | 0.37 | 0.37 | 0.38 |
| | Transmit tance% of 0.7mm microcry stalline glass at 560nm | 91.6 | 91.6 | 91.5 | 91.5 | 91.4 | 91.4 | 91.3 | 91.3 |
| | Haze% | 0.11 | 0.11 | 0.12 | 0.13 | 0.13 | 0.14 | 0.15 | 0.15 |
| Chemically-st rengthened microcrystalli ne glass | $Li_2Si_2O_5$/ % | 36 | 34 | 34 | 32 | 32 | 31 | 31 | 30 |
| | $LiAlSi_4O$ 10/% | 34 | 33 | 32 | 32 | 32 | 31 | 30 | 30 |
| | Total crystallin e phase content | 70 | 67 | 66 | 64 | 64 | 62 | 61 | 60 |
| 180-mesh sandpaper drop height/cm | | 230 | 225 | 220 | 220 | 220 | 210 | 205 | 200 |

Table III3 Glass composition components and glass performance in Comparative examples C1 to C6

| | | Comparative example C1 | Comparative example C2 | Comparative example C3 | Comparative example C4 | Comparative example C5 | Comparative example C6 |
|---|---|---|---|---|---|---|---|
| $SiO_2$ | | 72 | 73.5 | 72.7 | 73.5 | 73 | 73.5 |
| $Al_2O_3$ | | 9 | 5.5 | 7 | 8 | 7.5 | 7.5 |
| $P_2O_5$ | | 3 | 3.5 | 2.3 | 3.3 | 2.8 | 2.5 |
| $B_2O_3$ | | 0.5 | 0.5 | 0.3 | 1 | 0.5 | 0 |
| $Li_2O$ | | 11 | 11 | 12.5 | 9 | 11 | 10.4 |
| $Na_2O$ | | 1 | 1.2 | 1.4 | 1.2 | 1 | 0.8 |
| $CaO$ | | 0.5 | 0.6 | 0.8 | 0.6 | 1.6 | 0.6 |
| $ZrO_2$ | | 3 | 4.2 | 3 | 3.4 | 2.6 | 4.7 |
| A | | -4 | 18.5 | 5.7 | 7.5 | 6 | 7.7 |
| B | | 0.33 | 0.71 | 1.04 | 0.15 | 0.65 | 0.40 |
| $C_3$ | | 1.00 | 1.20 | 1.10 | 1.22 | 0.43 | 1.64 |
| Microcrystalline glass | $Li_2Si_2O_5$/% | 31 | 13 | 35 | 25 | 54 | 16 |
| | $LiAlSi_4O_{10}$/% | 37 | 18 | 38 | 28 | 15 | 52 |
| | Crystal size nm | 122 | 65 | 145 | 68 | 136 | 113 |
| | Total crystalline phase content | 68 | 31 | 73 | 53 | 69 | 68 |
| | b value | 1.66 | 0.38 | 3.38 | 0.43 | 1.82 | 1.52 |
| | Transmittance% of 0.7mm microcrystalline glass at 560nm | 88.6 | 91.5 | 86.2 | 91.4 | 88.2 | 88.8 |
| | Haze% | 0.42 | 0.13 | 0.85 | 0.12 | 0.35 | 0.41 |
| Chemically-strengthened microcrystalline glass | $Li_2Si_2O_5$/% | 29 | 6 | 31 | 15 | 29 | 9 |
| | $LiAlSi_4O_{10}$/% | 34 | 10 | 33 | 17 | 8 | 25 |
| | Total crystalline phase content | 63 | 16 | 64 | 32 | 37 | 34 |
| 180-mesh sandpaper drop height/cm | | 210 | 100 | 210 | 135 | 160 | 150 |

Table III4 Process parameter and performance of microcrystalline glass prepared by glass composition in Embodiments C1 and C8

| | | Glass composition of Embodiment C1 | | | | Glass composition of Embodiment C8 | | | |
|---|---|---|---|---|---|---|---|---|---|
| Treatment system | First nucleation treatment | 20min, 510°C, 3h | 60min, 510°C, 8h | 40min, 540°C, 3h | 40min, 540°C, 8h | 20min, 510°C, 3h | 40min, 510°C, 8h | 60min, 540°C, 3h | 40min, 540°C, 8h |
| | Second nucleation treatment | 5min, 580°C, 3h | 30min, 580°C, 8h | 17min, 610°C, 3h | 16min, 610°C, 8h | 5min, 580°C, 3h | 17min, 580°C, 8h | 5min, 610°C, 3h | 30min, 610°C, 8h |
| | Crystallization treatment | 30min, 650°C, 3h | 5min, 650°C, 8h | 16min, 680°C, 3h | 17min, 680°C, 8h | 30min, 650°C, 3h | 30min, 650°C, 8h | 15min, 680°C, 3h | 16min, 680°C, 8h |
| Crystalline phase | $Li_2Si_2O_5$/% | 32 | 38 | 35 | 43 | 38 | 42 | 41 | 45 |
| | $LiAlSi_4O_{10}$/% | 33 | 42 | 36 | 45 | 38 | 43 | 40 | 45 |
| Crystal size nm | | 76 | 89 | 84 | 93 | 76 | 85 | 79 | 92 |
| Total crystalline phase content | | 65 | 80 | 71 | 88 | 76 | 85 | 81 | 90 |
| b value after heat treatment | | 0.39 | 0.41 | 0.41 | 0.42 | 0.32 | 0.33 | 0.34 | 0.35 |
| Haze% | | 0.16 | 0.18 | 0.17 | 0.19 | 0.11 | 0.12 | 0.12 | 0.13 |
| Transmittance% of 0.7mm microcrystalline glass at 560nm | | 91.2 | 91.1 | 91.1 | 91 | 91.7 | 91.5 | 91.6 | 91.5 |

The time for the first nucleation treatment, the second nucleation treatment, and crystallization treatment represented the time for heating, the temperature represented a target heating temperature, and the time represented a treatment time.

Table III5 Process parameter and performance of the chemically-strengthened microcrystalline glass prepared by glass composition in Embodiments C1 and C8

| Glass composition of Embodiment C1 | | | | | | | | | |
|---|---|---|---|---|---|---|---|---|---|
| Chemical strengthening system | Molten salt concentration | $NaNO_3$ 40%, $KNO_3$ 60% | $NaNO_3$ 40%, $KNO_3$ 60% | $NaNO_3$ 40%, $KNO_3$ 60% | $NaNO_3$ 40%, $KNO_3$ 60% | $NaNO_3$ 20%, $KNO_3$ 80% | $NaNO_3$ 20%, $KNO_3$ 80% | $NaNO_3$ 20%, $KNO_3$ 80% | $NaNO_3$ 20%, $KNO_3$ 80% |
| | Strengthening temperature, time | 500°C, 8h | 500°C, 3h | 420°C, 8h | 420°C, 3h | 420°C, 3h | 420°C, 8h | 500°C, 3h | 500°C, 8h |
| 180-mesh sandpaper drop height/cm | | 200 | 225 | 220 | 230 | 235 | 225 | 230 | 210 |
| Glass composition of Embodiment C8 | | | | | | | | | |
| Chemical strengthening | Molten salt | $NaNO_3$ 40%, | $NaNO_3$ 40%, | $NaNO_3$ 40%, | $NaNO_3$ 40%, | $NaNO_3$ 20%, | $NaNO_3$ 20%, | $NaNO_3$ 20%, | $NaNO_3$ 20%, |

(continued)

| Glass composition of Embodiment C8 | | | | | | | | | |
|---|---|---|---|---|---|---|---|---|---|
| strengthening system | concentration | $KNO_3$ 60% | $KNO_3$ 60% | $KNO_3$ 60% | $KNO_3$ 60% | $KNO_3$ 80% | $KNO_3$ 80% | $KNO_3$ 80% | $KNO_3$ 80% |
| | Strengthening temperature, time | 500°C, 8h | 500°C, 3h | 420°C, 8h | 420°C, 3h | 420°C, 3h | 420°C, 8h | 500°C, 3h | 500°C, 8h |
| 180-mesh sandpaper drop height/cm | | 235 | 250 | 245 | 255 | 260 | 250 | 255 | 245 |

From performance test results of the microcrystalline glass of various embodiments shown in Table III1, Table III2, Table III4, and Table III5, it might be seen that, by using the Embodiments C1-C16 of the technical solutions of the present invention, the lithium disilicate $Li_2Si_2O_5$ in the chemically-strengthened microcrystalline glass was greater than 30%, the petalite $LiAlSi_4O_{10}$ was greater than 30%, the total crystalline phase of the microcrystalline glass and the total crystalline phase of the chemically-strengthened microcrystalline glass were both 60%-90%, the average crystal size of the crystal particle in the microcrystalline glass was less than 100 nm, the visible light transmittance of the 0.7mm microcrystalline glass was greater than 91%, and the drop resistance height was greater than 200 cm.

From Table III3, it might be seen that, in Comparative example C1, $Al_2O_3$ = 9%, A = -4, and $C_3$ = 1, failing to meet requirements of the glass composition of the present invention, the microcrystalline phase content in the heat-treated microcrystalline glass was less, crystal size >100nm; the transmittance was low, the b value was too large, and the haze was large.

In Comparative example C2, $Al_2O_3$ = 5.5%, A = 18.5, and $C_3$ = 1.2, failing to meet requirements of the glass composition of the present invention, the microcrystalline phase content in the heat-treated microcrystalline glass was less, and drop resistance was relatively poor.

In Comparative example C3, $Li_2O$ = 12.5%, B = 1.04, and $C_3$ = 1.1, failing to meet requirements of the glass composition of the present invention, the size of the heat-treated microcrystalline glass was greater than 100nm; and the transmittance was low, the b value was too large, and the haze was large.

In Comparative example C4, $Li_2O$ = 9%, B = 0.15, and $C_3$ = 1.22, failing to meet requirements of the glass composition of the present invention, the crystalline phase content in the chemically-strengthened microcrystalline glass was less, and drop resistance was relatively poor.

In Comparative example C5, CaO = 1.6%, $ZrO_2$ = 2.6%, and $C_3$ = 0.43, failing to meet requirements of the glass composition of the present invention, the size of the heat-treated microcrystalline glass was greater than 100nm; the transmittance was low, the b value was too large, the haze was large; and the crystalline phase content in the chemically-strengthened microcrystalline glass was less, and drop resistance was relatively poor.

In Comparative example C6, $B_2O_3$ = 0, and $C_3$ = 1.64, failing to meet requirements of the glass composition of the present invention, the size of the heat-treated microcrystalline glass was greater than 100nm; the transmittance was low, the b value was too large, the haze was large; and the crystalline phase content in the chemically-strengthened microcrystalline glass was less, and drop resistance was relatively poor.

Compared to the reduction in the total crystalline phase content of the microcrystalline glass relative to the chemically-strengthened microcrystalline glass in the comparative examples, the reduction in the total crystalline phase content of the microcrystalline glass relative to the chemically-strengthened microcrystalline glass in the embodiments of the present invention was less, it indicated that the situations of a reduced crystal content and a damaged interlocking structure of two crystalline phases occurred in the microcrystalline glass in the embodiments of the present invention during the chemical strengthening process were significantly improved, and the strengthening performance of the obtained the chemically-strengthened microcrystalline glass was excellent.

The above are merely the preferred embodiments of the present invention, and are not intended to limit the scope of the patent for the present invention. For those skilled in the art, the present invention may have various modifications and variations. Any modifications, equivalent replacements, improvements and the like made within the spirit and principle of the present invention shall fall within the scope of patent protection of the present invention.

**Claims**

1. A glass composition, comprising, by mass percentage:

71.5-74.5% of $SiO_2$;
6.2-8.7% of $Al_2O_3$;
1.7-3% of $P_2O_5$;
10-12.5% of $Li_2O$;
0.1-2% of $Na_2O$; and
3-5% of $ZrO_2$.

2. The glass composition according to claim 1, further comprising: 0.1-1.7% of $B_2O_3$ and/or 0.1-1.5% of CaO.

3. The glass composition according to claim 2, wherein $-1.1 \leq W(SiO_2)-6 \times W(Al_2O_3)-2 \times W(Li_2O) \leq 6.7$.

4. The glass composition according to claim 2, wherein $0.19 \leq [W(Li_2O)-W(AL_2O_3)]/[W(P_2O_5)+W(ZrO_2)] \leq 0.98$.

5. The glass composition according to claim 2, wherein $0.06 \leq [W(ZrO_2)-3 \times W(B_2O_3)]/W(P_2O_5) \leq 1.57$.

6. The glass composition according to claim 2, comprising, by mass percentage:

72-74% of $SiO_2$;
7.5-8.4% of $Al_2O_3$;
2-2.8% of $P_2O_5$;
0.3-0.8% of $B_2O_3$;
10.5-11.8% of $Li_2O$;
0.5-1.3% of $Na_2O$; and
3.4-4.7% of $ZrO_2$.

7. The glass composition according to claim 6, wherein $0.6 \leq W(SiO_2)-6 \times W(Al_2O_3)-2 \times W(Li_2O) \leq 5.4$;

$$0.28 \leq [W(Li_2O)-W(Al_2O_3)]/[W(P_2O_5)+W(ZrO_2)] \leq 0.8;$$

and

$$0.5 \leq [W(ZrO_2)-3 \times W(B_2O_3)]/W(P_2O_5) \leq 1.36.$$

8. The glass composition according to claim 2, wherein $2.9 \leq W(SiO_2)-6 \times W(Al_2O_3)-2 \times W(Li_2O) \leq 5.2$;

$$0.26 \leq [W(Li_2O)-W(Al_2O_3)]/[W(P_2O_5)+W(ZrO_2)] \leq 0.85;$$

$$1.17 \leq W(ZrO_2)/W(P_2O_5) \leq 2.61;$$

and

$$2.5 \leq [W(SiO_2)-6 \times W(Al_2O_3)-2 \times W(Li_2O)]/W(Na_2O) \leq 5.8.$$

9. The glass composition according to claim 2, wherein $2 \leq [W(ZrO_2)-W(CaO)]/[W(P_2O_5)-W(B_2O_3)] \leq 3.22$.

10. The glass composition according to claim 3, wherein $2.06 \leq [W(ZrO_2)-W(CaO)]/[W(P_2O_5)-W(B_2O_3)] \leq 2.31$.

11. The glass composition according to claim 2, wherein $2.3 \leq W(SiO_2)-6 \times W(Al_2O_3)-2 \times W(Li_2O) \leq 10.3$; and

$$0.27 \leq [W(Li_2O)-W(Al_2O_3)]/[W(P_2O_5)+W(ZrO_2)] \leq 0.87.$$

12. A microcrystalline glass, comprising the glass composition according to any one or claims 1 to 11.

**13.** The microcrystalline glass according to claim 12, wherein a thickness of the microcrystalline glass is 0.3-1.5 mm.

**14.** The microcrystalline glass according to claim 12, wherein the microcrystalline glass contains a crystalline phase $Li_2Si_2O_5$ and a crystalline phase $LiAlSi_4O_{10}$.

**15.** A method for preparing a microcrystalline glass, comprising the following steps:

S10, weighing the glass composition according to any one or claims 1 to 11;
S20, mixing the glass composition, then melting, clarifying, homogenizing, molding, annealing, and finally cutting to obtain a basic glass; and
S30, heat treating on the basic glass to obtain the microcrystalline glass.

**16.** The method for preparing the microcrystalline glass according to claim 15, wherein the step of heat treating on the basic glass to obtain the microcrystalline glass comprises:

heating the basic glass from a room temperature to 530-570°C in 20-60 min, and performing a nucleation treatment for over 3h;
heating a temperature to 680-720°C in 5-30 min, and performing a crystallization treatment for over 3h; and
cooling the temperature to the room temperature to obtain the microcrystalline glass.

**17.** The method for preparing the microcrystalline glass according to claim 15, wherein S30 comprises:

heating the basic glass from the room temperature to 510-540°C in 20-60 min, and performing a first nucleation treatment, wherein a time for the first nucleation treatment is 3-8h;
heating a temperature to 580-610°C in 5-30 min, and performing a second nucleation treatment, wherein a time for the second nucleation treatment is 3-8h;
heating the temperature to 650-680°C in 5-30 min, and performing acrystallization treatment, wherein a time for the crystallization treatment is 3-8h; and
cooling the temperature to the room temperature to obtain the microcrystalline glass.

**18.** The method for preparing the microcrystalline glass according to claim 15, wherein after S30, the method further comprises:

S40, pre-treating the microcrystalline glass, and then placing same into an ion exchange bath for a salt bath, so as to obtain a chemically-strengthened microcrystalline glass, wherein
the ion exchange bath comprises, by mass percentage, 20-40% of NaNOs and 60-80% of KNOs; and/or
a strengthening temperature of the salt bath is 420-500°C; and/or
a strengthening time of the salt bath is 3-8h.

**19.** The method for preparing microcrystalline glass according to claim 15, wherein, in S20, a molding method comprises a float molding, an overflow molding, a calendaring molding, or a slit pull-down molding.

**20.** An electronic display terminal, comprising the microcrystalline glass according to any one of claims 12, 13, and 14.

Fig. 1

Weighing the glass composition as described above — S10

Mixing the glass composition, then melting, clarifying, homogenizing, molding, annealing, and finally cutting to obtain a basic glass — S20

Heat treating on the basic glass to obtain the microcrystalline glass — S30

Fig. 2

Weighing the glass composition as described above — S10

Mixing the glass composition, then melting, clarifying, homogenizing, molding, annealing, and finally cutting to obtain a basic glass — S20

Heat treating on the basic glass to obtain the microcrystalline glass — S30

Pre-treating the microcrystalline glass , and then placing same into an ion exchange bath for a salt bath, so as to obtain a chemically-strengthened microcrystalline glass — S40

Fig. 3

## INTERNATIONAL SEARCH REPORT

| International application No. |
|---|
| **PCT/CN2022/139075** |

**A. CLASSIFICATION OF SUBJECT MATTER**

C03C10/12(2006.01)i;C03B32/02(2006.01)i;C03C21/00(2006.01)i

According to International Patent Classification (IPC) or to both national classification and IPC

**B. FIELDS SEARCHED**

Minimum documentation searched (classification system followed by classification symbols)

C03B,C03C

Documentation searched other than minimum documentation to the extent that such documents are included in the fields searched

Electronic data base consulted during the international search (name of data base and, where practicable, search terms used)

CNABS, CNTXT, VEN, CNKI, ENTXT, ELSEVIER: 玻璃, 组合物, 微晶, 玻璃陶瓷, 氧化硅, 氧化铝, 五氧化二磷, 氧化锂, 氧化钠, 氧化锆, 三氧化二硼, 氧化钙, 透锂长石, 二硅酸锂, SiO2, Al2O3, P2O5, Li2O, Na2O, ZrO2, B2O3, glass, composite, microcrystal, glass ceramic, silicon oxide, alumina, phosphorus pentoxide, lithium oxide, sodium oxide, boron trioxide , calcium oxide, petalite, lithium disilicate

**C. DOCUMENTS CONSIDERED TO BE RELEVANT**

| Category* | Citation of document, with indication, where appropriate, of the relevant passages | Relevant to claim No. |
|---|---|---|
| PX | CN 114195392 A (SHENZHEN NEW KIBING TECHNOLOGY CO., LTD.) 18 March 2022 (2022-03-18)<br>claims 1-14 | 1, 12-20 |
| PX | CN 114195393 A (SHENZHEN NEW KIBING TECHNOLOGY CO., LTD.) 18 March 2022 (2022-03-18)<br>claims 1-13 | 1-20 |
| PX | CN 114195394 A (SHENZHEN NEW KIBING TECHNOLOGY CO., LTD.) 18 March 2022 (2022-03-18)<br>claims 1-15 | 1-20 |
| X | CN 111757858 A (AGC INC.) 09 October 2020 (2020-10-09)<br>claims 1, 4, and 6, and description, paragraphs 0132, 0134, and 0147-0180, table 1, glass 4, and table 3, examples 12-14 | 1-20 |
| X | CN 110944954 A (AGC INC.) 31 March 2020 (2020-03-31)<br>description, paragraphs 0125 and 0127, table 1, example 5, glass 5, and table 2, example 5 | 1-20 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 March 2023** | **06 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/139075** |

**C.    DOCUMENTS CONSIDERED TO BE RELEVANT**

| Category* | Citation of document, with indication, where appropriate, of the relevant passages | Relevant to claim No. |
| --- | --- | --- |
| X | CN 113195424 A (CORNING INC.) 30 July 2021 (2021-07-30)<br>    description, paragraphs 0395-0396, 0401-0424, 0435, and 0520-0521, and compositions 7<br>    and 8 | 1-20 |
| X | CN 111954646 A (CORNING INC.) 17 November 2020 (2020-11-17)<br>    description, paragraphs 0093-0094 and 0101-0116 | 1-20 |
| X | CN 112585101 A (CORNING INC.) 30 March 2021 (2021-03-30)<br>    description, paragraphs 0124-0138 and 144 | 1-20 |
| A | US 2020148584 A1 (EUROKERA S.N.C.) 14 May 2020 (2020-05-14)<br>    entire document | 1-20 |

**INTERNATIONAL SEARCH REPORT**
Information on patent family members

International application No.

**PCT/CN2022/139075**

| Patent document<br>cited in search report | | | Publication date<br>(day/month/year) | Patent family member(s) | | | Publication date<br>(day/month/year) |
|---|---|---|---|---|---|---|---|
| CN | 114195392 | A | 18 March 2022 | None | | | |
| CN | 114195393 | A | 18 March 2022 | None | | | |
| CN | 114195394 | A | 18 March 2022 | None | | | |
| CN | 111757858 | A | 09 October 2020 | US | 2022064054 | A1 | 03 March 2022 |
| | | | | JPWO | 2019167850 | A1 | 04 February 2021 |
| | | | | WO | 2019167850 | A1 | 06 September 2019 |
| | | | | US | 2020346969 | A1 | 05 November 2020 |
| CN | 110944954 | A | 31 March 2020 | US | 2020156994 | A1 | 21 May 2020 |
| | | | | WO | 2019022033 | A1 | 31 January 2019 |
| CN | 113195424 | A | 30 July 2021 | WO | 2020018393 | A1 | 23 January 2020 |
| | | | | KR | 20220014912 | A | 07 February 2022 |
| | | | | EP | 3823935 | A1 | 26 May 2021 |
| | | | | KR | 20210081321 | A | 01 July 2021 |
| | | | | KR | 102356026 | B1 | 08 February 2022 |
| | | | | AU | 2019308175 | A1 | 18 March 2021 |
| | | | | AU | 2019308175 | B2 | 28 July 2022 |
| | | | | JP | 2021531229 | A | 18 November 2021 |
| | | | | JP | 7116243 | B2 | 09 August 2022 |
| | | | | CA | 3129655 | A1 | 23 January 2020 |
| | | | | CA | 3129655 | C | 03 January 2023 |
| | | | | US | 2020017398 | A1 | 16 January 2020 |
| | | | | US | 11014848 | B2 | 25 May 2021 |
| | | | | US | 2021238083 | A1 | 05 August 2021 |
| CN | 111954646 | A | 17 November 2020 | TW | 202003408 | A | 16 January 2020 |
| | | | | WO | 2019191358 | A1 | 03 October 2019 |
| | | | | US | 2019300426 | A1 | 03 October 2019 |
| CN | 112585101 | A | 30 March 2021 | JP | 2021534065 | A | 09 December 2021 |
| | | | | KR | 20210046005 | A | 27 April 2021 |
| | | | | TW | 202010720 | A | 16 March 2020 |
| | | | | TWI | 701222 | B | 11 August 2020 |
| | | | | EP | 3841073 | A1 | 30 June 2021 |
| | | | | WO | 2020041057 | A1 | 27 February 2020 |
| | | | | US | 2020055764 | A1 | 20 February 2020 |
| | | | | US | 11401193 | B2 | 02 August 2022 |
| US | 2020148584 | A1 | 14 May 2020 | EP | 3625183 | A1 | 25 March 2020 |
| | | | | WO | 2018211216 | A1 | 22 November 2018 |
| | | | | JP | 2023001207 | A | 04 January 2023 |
| | | | | JP | 2020520340 | A | 09 July 2020 |
| | | | | FR | 3066489 | A1 | 23 November 2018 |
| | | | | FR | 3066489 | B1 | 25 September 2020 |
| | | | | US | 11548809 | B2 | 10 January 2023 |

Form PCT/ISA/210 (patent family annex) (July 2022)

**EP 4 434 949 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111682724
- CN 202111681556
- CN 202111682722